# EUROPEAN PATENT APPLICATION

(11) **EP 4 835 712 A1**
(43) Date of publication of application: **04.11.2026**
(21) Application number: 25829373.7
(22) Date of filing: 28.03.2025
(51) Int. Cl.: G06F 21/62, G06F 21/60, G06F 16/176

(54) **DATA SHARING METHOD AND RELATED DEVICE**

(30) Priority: 19.06.2024 CN 202410798118
(71) Applicant: Huawei Technologies Co., Ltd., Shenzhen, Guangdong 518129 (CN)
(72) Inventor: FANG, Xiwen, Shenzhen, Guangdong 518129 (CN); PAN, Shiran, Shenzhen, Guangdong 518129 (CN); HU, Huifeng, Shenzhen, Guangdong 518129 (CN); JIN, Liang, Shenzhen, Guangdong 518129 (CN)
(74) Representative: Huawei European IPR
(86) International application number: PCT/CN2025/085715
(87) International publication number: WO 2025/260886

(57) **Abstract**

This application discloses a data sharing method and a related device. For a sender, a sender device can provide system-level file encryption, management and control, and sharing functions, and does not depend on necessary installation of a specific application on the sender device. The sender can select a to-be-shared file from a system by using the sender device, set a permission control policy, and send the file to a receiver device in one or more different manners. For a receiver, the receiver device can provide a data management and control function. The receiver can receive and open the shared file by using the receiver device. The system can dynamically adjust permission of applications to access different functions of the system based on the permission control policy specified in the file. For example, the receiver can be managed and controlled not to perform an operation such as copy, screenshot, or print on the file. Even if an attacker attacks an application that opens the file, the attacker cannot perform the foregoing operations on the file. In this way, improvement is implemented in aspects of scenario support, security, and ecosystem friendliness, and user experience is better.

## Description

This application claims priority to Chinese Patent Application No. 202410798118.7, filed with the China National Intellectual Property Administration on June 19, 2024 and entitled "DATA SHARING METHOD AND RELATED DEVICE", which is incorporated herein by reference in its entirety.

### TECHNICAL FIELD

This application relates to the field of terminal technologies, and in particular, to a data sharing method and a related device.

### BACKGROUND

With rapid development of terminal technologies, a user 1 may share data such as a document and an image to a terminal device of a user 2 by using a terminal device such as a smartphone or a tablet computer. There may be some data that the user 1 does not expect the user 2 to leak. Generally, the user 1 orally instructs the user 2 not to forward those data. However, effect of the oral instruction is limited. The user 2 can still perform an operation such as forward, print, copy, or screenshot on those data at will. As a result, security is low, and user experience is poor.

### SUMMARY

Embodiments of this application provide a data sharing method and a related device, to provide system-level file encryption, management and control, and sharing functions and a data management and control function. In this way, improvement is implemented in aspects of scenario support, security, and ecosystem friendliness, and user experience is better.

According to a first aspect, an embodiment of this application provides a data sharing method, applied to a first electronic device. The method includes: The first electronic device determines that a first file is selected. In response to an operation of sharing the first file on a first interface, the first electronic device sends the first file to a second electronic device associated with a first user. The first electronic device is configured to set first permission for the first file. The first permission takes effect when a plurality of applications on the first electronic device send the first file. The first permission indicates one or more operations that the first user is authorized to perform on the first file.

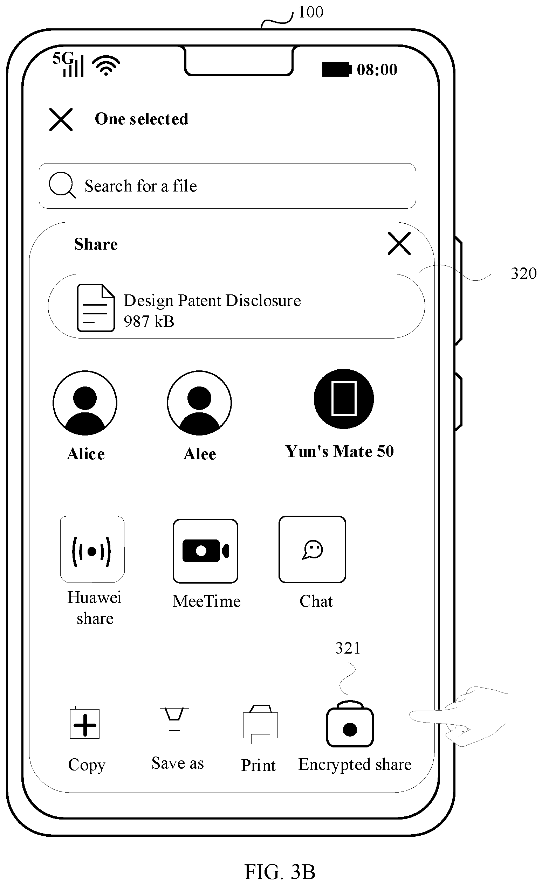

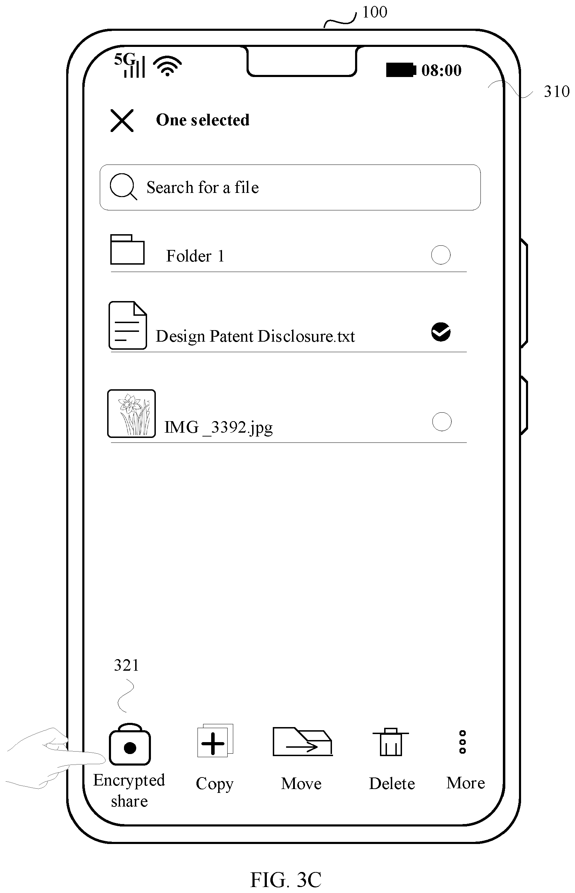

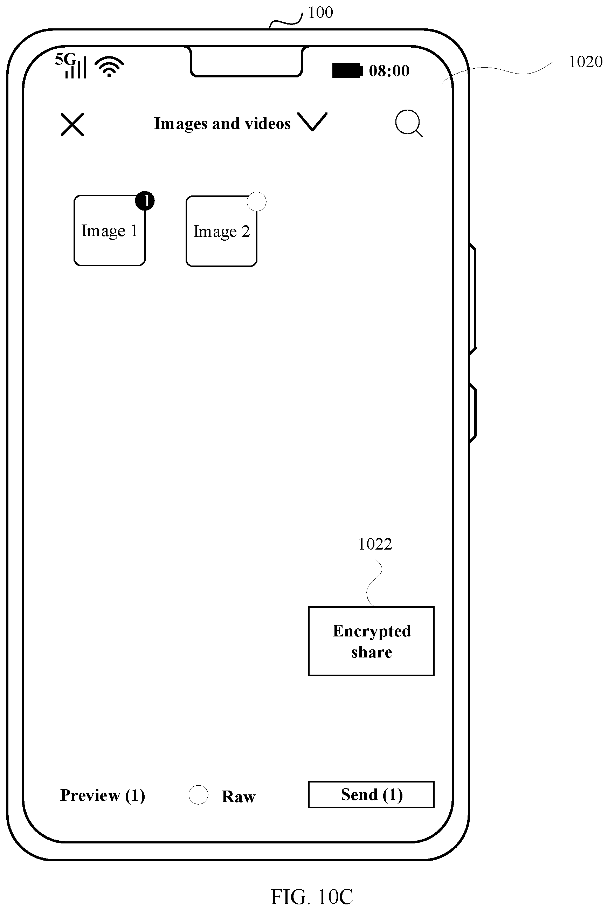

The first electronic device may be, for example, an electronic device 100 (a sender device), and the second electronic device may be, for example, an electronic device 200 (a receiver device). The first file is a to-be-shared file, and may include but is not limited to an image, a document, and audio and video. The first interface may be, for example, an interface shown in FIG. 3B, FIG. 3C, or FIG. 10C. The first user is a receiver, and an individual, or a group.

By implementing the method provided in the first aspect, the electronic device can support a user in using a system function to configure who a file is to be sent to and permission (for example, read-only permission and editable permission) of a file receiver, and an upper-layer application does not need to perceive this, thereby improving ecological friendliness and improving user experience.

In a possible implementation, the method further includes: Before the first electronic device sends the first file to the second electronic device associated with the first user, the first electronic device displays at least one of a device list, an application list, and a user list on an interface. The interface is the first interface or a second interface. The first electronic device sending the first file to the second electronic device associated with the first user specifically includes that: in response to an operation of selecting the second electronic device from the device list, the first electronic device sends the first file to the second electronic device associated with the first user; or in response to an operation of selecting a first application from the application list, the first electronic device sends, by using the first application, the first file to the second electronic device associated with the first user; or in response to an operation of selecting the first user from the user list, the first electronic device sends the first file to the second electronic device associated with the first user.

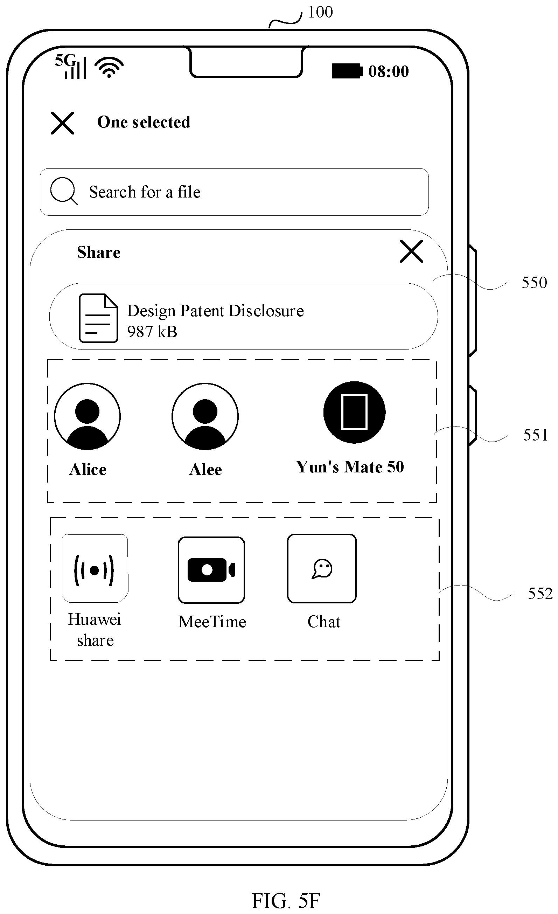

The second interface may be, for example, an interface shown in FIG. 5F. The device list may include options of one or more devices (for example, Yun's Mate 50 shown in FIG. 5F). The application list may include options of one or more applications (for example, Huawei Share, MeeTime, and Chat shown in FIG. 5F). The user list may include options of one or more users (for example, Alice and Alee shown in FIG. 5F).

That first electronic device sends, by using the first application, the first file to the second electronic device associated with the first user may include two manners. In a first manner, the first application first determines the first user, then determines, based on the first user, a device associated with the first user, and finally sends the first file to the device. In a second manner, the first application directly determines a receiver device, and sends the first file to the device.

In this way, the electronic device can support the user in performing file sharing in different manners, to implement high flexibility and improve user experience.

In a possible implementation, the first electronic device sending the first file to the second electronic device associated with the first user specifically includes that: in response to an operation that is of sharing the first file and that is triggered on an interface, the first electronic device sends the first file to the second electronic device associated with the first user. The interface is an interface on which a conversation with the first user is performed.

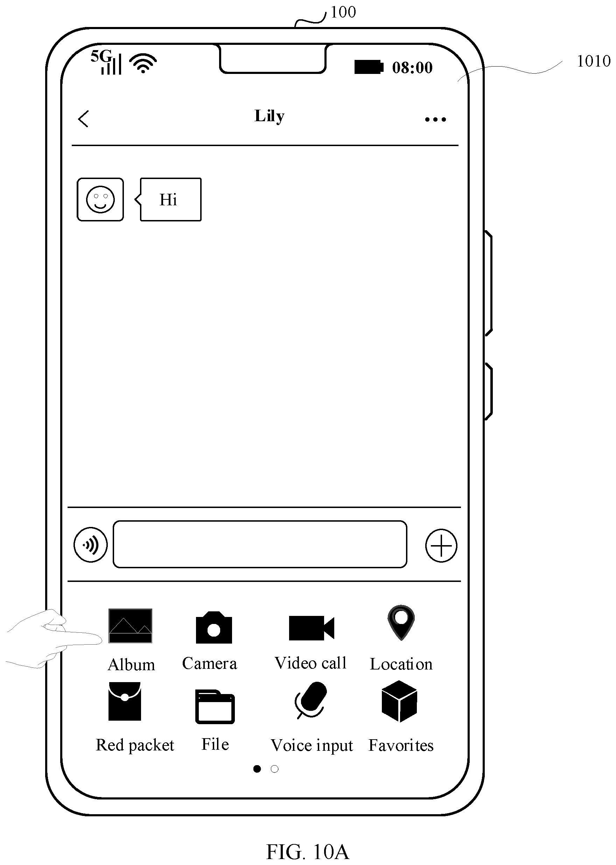

The interface may be, for example, an interface shown in FIG. 10A or FIG. 10C.

In this way, the electronic device can support a user in sharing, on an application (for example, a communication application), a file whose permission is set by a system, to resolve the following problem: Permission setting initiated on an application needs to be separately implemented by the application, and repeated implementation is required if another application is to perform permission management and control on a file.

In a possible implementation, the first permission is set for the first file before the operation of sharing the first file; or the first permission is set for the first file after the operation of sharing the first file, and the first file is sent to the second electronic device associated with the first user.

In other words, the electronic device may support a user in first setting permission for a file and then performing a sharing operation, or may support a user in first performing a sharing operation. The sharing operation may trigger the electronic device to set permission for the file and send the file.

In a possible implementation, the method further includes: In response to the operation of sharing the first file on the first interface, the first electronic device sends the first file to a third electronic device associated with a second user. The first electronic device is configured to set second permission for the first file. The second permission takes effect when a plurality of applications on the first electronic device send the first file. The second permission indicates one or more operations that the second user is authorized to perform on the first file.

The second permission may be the same as or different from the first permission.

In this way, for a same file, the electronic device may set corresponding permission respectively for a plurality of users.

In a possible implementation, the method further includes: The first electronic device determines that a second file is selected. In response to an operation of sharing the second file on the first interface, the first electronic device sends the second file to the second electronic device associated with the first user. The first electronic device is configured to set third permission for the second file. The third permission takes effect when a plurality of applications on the first electronic device send the second file. The third permission indicates one or more operations that the first user is authorized to perform on the second file.

The third permission may be the same as or different from the first permission.

In this way, for different files, the electronic device may set corresponding permission respectively for a same user.

In a possible implementation, the first user belongs to a first group. The first group further includes a third user. The method further includes: In response to the operation of sharing the first file on the first interface, the first electronic device sends the first file to a fourth electronic device associated with the third user, where the first permission further indicates one or more operations that the third user is authorized to perform on the first file. Alternatively, in response to the operation of sharing the first file on the first interface, the first electronic device sends the first file to a fourth electronic device associated with the third user. The first electronic device is configured to set fourth permission for the first file. The fourth permission takes effect when a plurality of applications on the first electronic device send the first file. The fourth permission indicates one or more operations that the third user is authorized to perform on the first file.

In this way, when a receiver belongs to a specific group, the electronic device may uniformly set permission for group members in the group, or may separately set permission for group members in the group.

In a possible implementation, before the first electronic device sends the first file to the second electronic device associated with the first user, the method further includes: The first electronic device logs in to a first account, where the first account belongs to an account of a fourth user.

The fourth user is a sender. In this way, after logging in to the account, the receiver may learn of the sender of the first file.

In a possible implementation, before the first electronic device sends the first file to the second electronic device associated with the first user, the method further includes: The first electronic device obtains a credential corresponding to the first user. The first electronic device encrypts the first file based on the credential.

In this way, the electronic device may encrypt a file before sending the file, thereby improving security.

In a possible implementation, the credential is obtained by the first electronic device from a server, or the credential is locally obtained by the first electronic device, or the credential is obtained by the first electronic device from the second electronic device.

In a possible implementation, that the first electronic device is configured to set the first permission for the first file specifically includes that the first electronic device is configured to write field information of the first permission into the first file; or the first electronic device is configured to send a first message to the server, where the first message includes field information of the first permission and identification information of the first file, and the first message indicates the server to store an association relationship between the field information of the first permission and the identification information of the first file.

In a possible implementation, the first permission includes read-only permission, editable permission, or forward permission, and the editable permission includes one or more of edit permission, save-as permission, screenshot permission, screen recording permission, print permission, and copy permission.

In this embodiment of this application, the forward permission may fall within a defined range of the first permission, or may fall out of a defined range of the first permission (that is, the forward permission and the first permission may be parallel).

In a possible implementation, the first file includes sensitive information.

In a possible implementation, the credential corresponding to the first user is associated with an identity corresponding to the first user. The identity corresponding to the first user is manually input by the user, or is selected by the user from an address book of the first electronic device, or is obtained by the first electronic device from the second electronic device.

In a possible implementation, that the first electronic device sets the first permission for the first file specifically includes that the first electronic device displays first prompt information, where the first prompt information is used to inform the user whether to agree to set the first permission for the first file; and the first electronic device sets the first permission for the first file when it is confirmed that the user agrees to set the first permission for the first file.

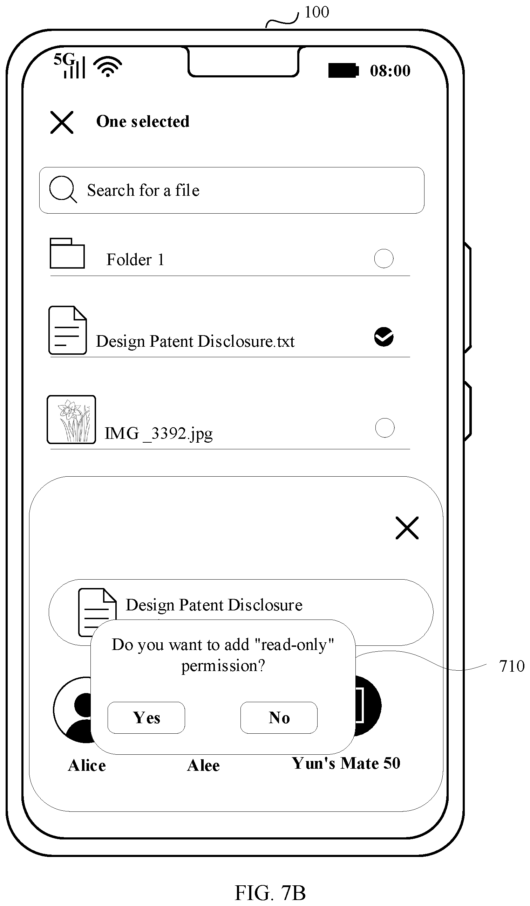

The first prompt information may be, for example, prompt information shown in FIG. 7B.

According to a second aspect, an embodiment of this application provides a data sharing method. The data sharing method is applied to a second electronic device. The method includes: The second electronic device receives a first file sent by a first electronic device. The first file is managed and controlled by first permission. The first permission takes effect when a plurality of applications on the second electronic device perform an operation within a management and control range of the first permission on the first file. The plurality of applications include a first application. The second electronic device obtains a first operation that is for the first file and that is in the first application. In response to the first operation, if the second electronic device determines that the first operation is one or more operations that are indicated by the first permission and that the first user is authorized to perform on the first file, the second electronic device responds to the first operation.

The first application may be a system application, or may be a third-party application.

By implementing the method provided in the second aspect, the electronic device can provide a data management and control function, and a receiver can receive and open a shared file by using the electronic device. A system can dynamically adjust permission of applications to access different functions of the system based on a permission control policy specified in the file. For example, the receiver can be managed and controlled not to perform an operation such as copy, screenshot, or print on the file. Even if an attacker attacks an application that opens the file, the attacker cannot perform the foregoing operations on the file. In this way, improvement is implemented in aspects of scenario support, security, and ecosystem friendliness, and user experience is better.

In a possible implementation, before the second electronic device determines that the first operation is one or more operations that are indicated by the first permission and that the first user is authorized to perform on the first file, the method further includes: The second electronic device determines that a user performing the first operation is the authenticated first user that has operation permission on the first file.

In other words, only when a user associated with a login account of a receiver device is the receiver that is of the first file and that is specified by a sender, the receiver device may further determine whether the first operation is one or more operations that are indicated by the first permission and that the first user is authorized to perform on the first file.

In a possible implementation, that the second electronic device determines that the user performing the first operation is the authenticated first user that has operation permission on the first file specifically includes that the second electronic device determines that a login account of the second electronic device is an account of the first user; or the second electronic device determines that a biometric feature of the user performing the first operation is consistent with a biometric feature of the first user; or the second electronic device receives a first message sent by a third electronic device, where the first message indicates that the user performing the first operation is the authenticated first user that has operation permission on the first file, and the third electronic device is associated with the second electronic device.

In this way, the electronic device may perform identity authentication on the receiver in different manners. This is convenient and flexible, and improves user experience.

In a possible implementation, the method further includes: When the second electronic device determines that the first operation does not belong to one or more operations that are indicated by the first permission and that the first user is authorized to perform on the first file, the second electronic device displays first prompt information, where the first prompt information is used to inform the user that the second electronic device refuses to respond to the first operation.

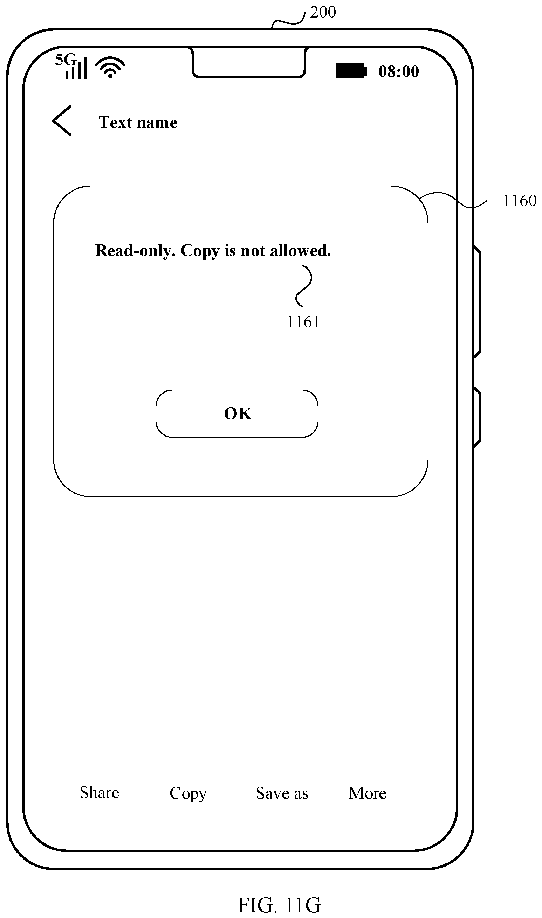

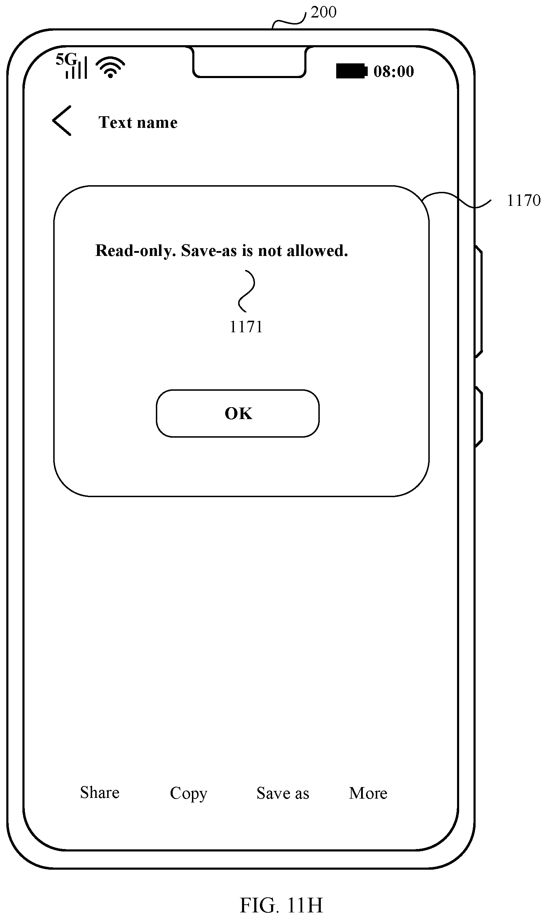

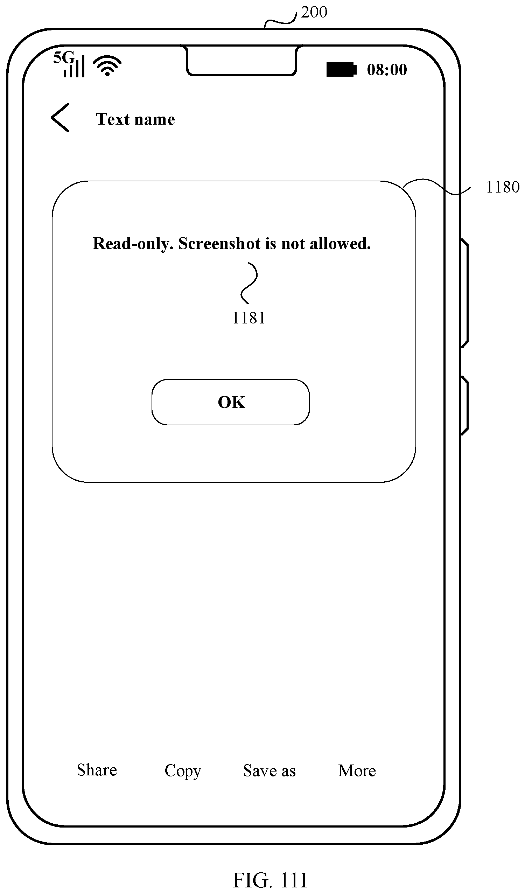

The first prompt information may be, for example, prompt information shown in FIG. 11G, FIG. 11H, or FIG. 11I.

In a possible implementation, the method further includes: In response to an operation of sharing the first file, the second electronic device sends the first file to the third electronic device associated with the first user.

In this way, the electronic device may support a user in forwarding the first file to another electronic device associated with the user.

In a possible implementation, the method further includes: In response to an operation of sharing the first file, the second electronic device sends the first file to a fourth electronic device associated with a second user.

In this way, the electronic device may support a user in forwarding the first file to an electronic device associated with another user.

In a possible implementation, when the first file is forwarded by the second electronic device, third permission is set for the first file, and an authorization range of the third permission does not exceed an authorization range of the first permission.

In other words, when a file is forwarded for a second time, an authorization range of permission set for the file may be smaller than an authorization range of permission when the file is forwarded for a first time. For example, read-only permission may be set during a second time of forwarding. In this way, security can be improved.

In a possible implementation, the method further includes: The second electronic device sends a second message to the first electronic device. The second message indicates a second operation that the first electronic device authorizes the first user to perform on the first file. The second operation does not belong to one or more operations that are indicated by the first permission and that the first user is authorized to perform on the first file.

In this way, when performing an operation that is not authorized to be performed on the file, the receiver device can instruct the sender device to perform authorization again.

In a possible implementation, the method further includes: The second electronic device sends a third message to the first electronic device. The third message indicates a forward operation that the first electronic device authorizes the first user to perform on the first file.

In this way, when performing the forward operation on the first file, the receiver device may instruct the sender device to authorize the receiver to perform the forward operation on the file.

In a possible implementation, the first file is an encrypted file. Before the second electronic device responds to the first operation, the method further includes: The second electronic device obtains a credential corresponding to the first user. The second electronic device decrypts the first file based on the credential.

In a possible implementation, the second electronic device displays a first identifier, and the first identifier indicates that the first file is an encrypted file.

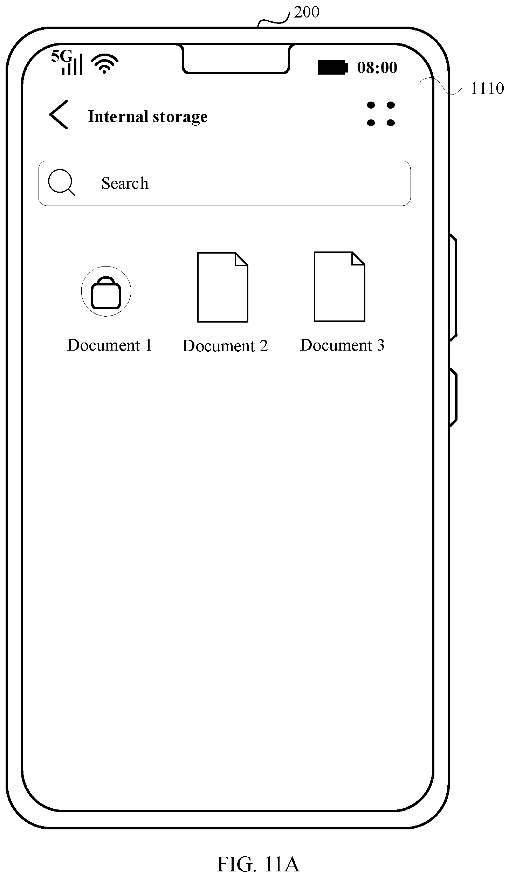

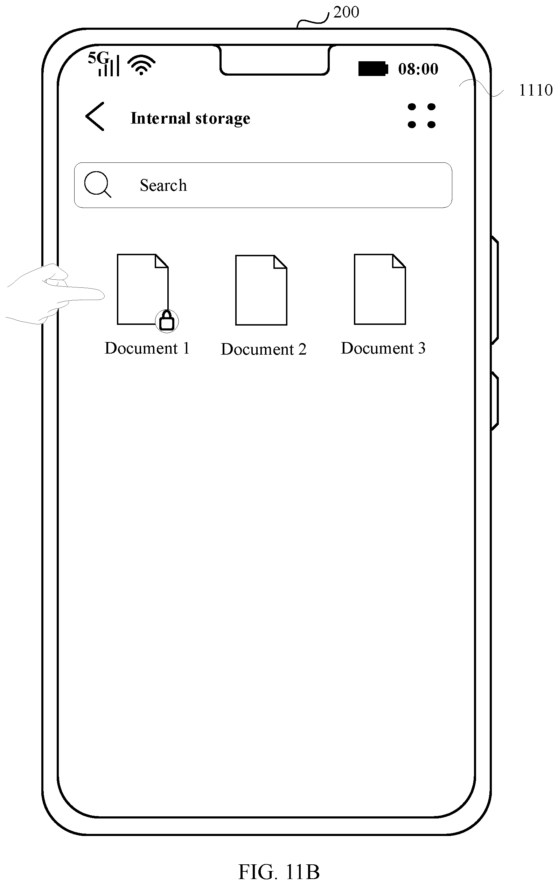

The first identifier may be, for example, an identifier of a document 1 shown in FIG. 11A (that is, icons of all encrypted files are same encryption icons), or may be, for example, an identifier of a document 1 shown in FIG. 11B (that is, an encryption icon is superimposed on an exclusive icon).

In a possible implementation, the first permission is obtained by the second electronic device from the first file; or the first permission is obtained by the second electronic device from a server.

In a possible implementation, the first permission includes read-only permission, editable permission, or forward permission, and the editable permission includes one or more of save-as permission, screenshot permission, screen recording permission, print permission, and copy permission.

According to a third aspect, an embodiment of this application provides an electronic device. The electronic device includes one or more processors and one or more memories. The one or more memories are coupled to the one or more processors. The one or more memories are configured to store computer program code. The computer program code includes computer instructions. When the one or more processors execute the computer instructions, the electronic device is enabled to perform the method according to any possible implementation of the first aspect or the second aspect.

According to a fourth aspect, an embodiment of this application provides a computer storage medium. The computer storage medium stores a computer program. The computer program includes program instructions. When the program instructions are run on an electronic device, the electronic device is enabled to perform the method according to any possible implementation of the first aspect or the second aspect.

According to a fifth aspect, an embodiment of this application provides a computer program product. When the computer program product is run on a computer, the computer is caused to perform the method according to any possible implementation of the first aspect or the second aspect.

### BRIEF DESCRIPTION OF DRAWINGS

FIG. 1 is a diagram of a software structure according to an embodiment of this application;
FIG. 2A is a diagram of an architecture of a communication system according to an embodiment of this application;
FIG. 2B is a diagram of a software architecture of an electronic device 100 according to an embodiment of this application;
FIG. 2C is a diagram of a software architecture of an electronic device 200 according to an embodiment of this application;
FIG. 3A to FIG. 3C are diagrams of a group of related user interfaces in a scenario in which data sharing is initiated by using a system according to an embodiment of this application;
FIG. 4A to FIG. 4C are diagrams of another group of related user interfaces in a scenario in which data sharing is initiated by using a system according to an embodiment of this application;
FIG. 5A to FIG. 5F are diagrams of another group of related user interfaces in a scenario in which data sharing is initiated by using a system according to an embodiment of this application;
FIG. 6A to FIG. 6C are a group of diagrams of obtaining a credential of a receiver by an electronic device 100 according to an embodiment of this application;
FIG. 7A and FIG. 7B are diagrams of another group of related user interfaces in a scenario in which data sharing is initiated by using a system according to an embodiment of this application;
FIG. 8A to FIG. 8J are diagrams of another group of related user interfaces in a scenario in which data sharing is initiated by using a system according to an embodiment of this application;
FIG. 9A to FIG. 9D are diagrams of another group of related user interfaces in a scenario in which data sharing is initiated by using a system according to an embodiment of this application;
FIG. 10A to FIG. 10D are diagrams of a group of related user interfaces in a scenario of initiating data sharing by using a communication application according to an embodiment of this application;
FIG. 11A to FIG. 11I are diagrams of a group of related user interfaces in a scenario of receiving and opening a shared file by using a system according to an embodiment of this application;
FIG. 12A and FIG. 12B are a schematic flowchart of controlling functions such as network and Bluetooth according to an embodiment of this application;
FIG. 13A and FIG. 13B are a schematic flowchart of controlling functions such as print and copy according to an embodiment of this application;
FIG. 14 is a schematic flowchart of controlling functions such as screenshot according to an embodiment of this application;
FIG. 15A and FIG. 15B are diagrams of a group of related user interfaces in a scenario of receiving and opening a shared file by using a system according to an embodiment of this application;
FIG. 16 is a schematic flowchart of a data sharing method according to an embodiment of this application;
FIG. 17 is a schematic flowchart of another data sharing method according to an embodiment of this application; and
FIG. 18 is a diagram of a structure of an electronic device 100 according to an embodiment of this application.

### DESCRIPTION OF EMBODIMENTS

The following clearly and completely describes the technical solutions in embodiments of this application with reference to the accompanying drawings in embodiments of this application. In the descriptions of embodiments of this application, "/" indicates or, unless otherwise specified. For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more than two.

It should be understood that terms "first", "second", and the like in the specification, the claims, and the accompanying drawings of this application are intended to distinguish between different objects, but are not intended to describe a specific order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this application means that a particular characteristic, structure, or feature described with reference to an embodiment may be included in at least one embodiment of this application. The phrase shown in various locations in this specification does not necessarily indicate a same embodiment, and is not an independent or optional embodiment exclusive from another embodiment. It is explicitly and implicitly understood by a person skilled in the art that embodiments described in this application may be combined with another embodiment.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as user-recognizable content. The user interface is usually represented in a form of a graphical user interface (graphical user interface, GUI), and is a user interface that is related to a computer operation and that is displayed in a graphic manner. The user interface may be a visual interface element such as a text, an icon, a button, a menu, a tab, a text box, a dialog box, a status bar, a navigation bar, or a widget that is displayed on a display of the electronic device.

Currently, some office document applications can implement a controlled file sharing function. Generally, a sender device may encrypt a to-be-shared file in an office document application, specify a specific receiver that can decrypt the file, and set specific permission (for example, read-only or editable) of the file. A receiver device may open the shared file in the office document application. The application can parse file content and execute the set permission of the file.

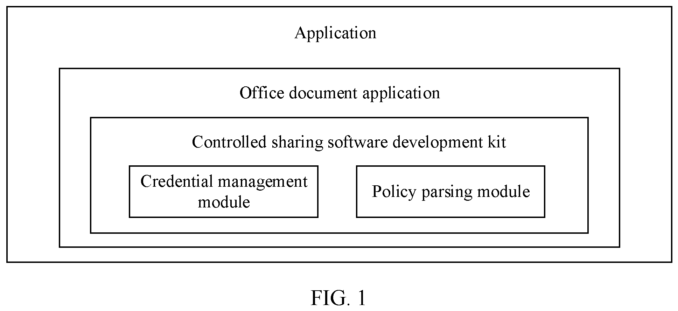

For example, with reference to FIG. 1, the office document application may be one of a plurality of applications installed on the electronic device. The application may include a controlled sharing software development kit. The controlled sharing software development kit may include a credential management module and a policy parsing module. The credential management module may be configured to perform an operation such as obtain or save on a credential of a user, and the policy parsing module may be configured to parse a permission policy of a file.

Some problems may also exist when the office document application is used to perform controlled sharing on a file. For example, in terms of scenario support, generally, only a specific document encrypted sharing scenario is supported, which is relatively limited. For another example, in terms of security (for example, credential management and permission management), when an application is hooked, a credential of a user may be leaked through the credential management module. In addition, permission set for a file is parsed by using the policy parsing module, and permission control depends on in-depth application customization and interception. When an application is hooked, a permission control point may be invalid. For another example, in terms of ecosystem friendliness, a controlled sharing function strongly depends on adaptation of each application, and a receiver device can use only one application to open a shared file (for example, if a permission control method implemented in an application is not adapted to another application, only this application can be used to open a file to which a permission setting is added), resulting in poor experience.

Based on the foregoing problems, an embodiment of this application provides a data sharing method. For a sender, an electronic device 100 (a sender device) can provide system-level file encryption, management and control, and sharing functions, and does not depend on necessary installation of a specific application on the electronic device 100. The sender can select a to-be-shared file (such as an image or a document) from a system by using the electronic device 100, set a permission control policy, and send the file to a receiver device in one or more different sending manners. For a receiver, an electronic device 200 (a receiver device) can provide a data management and control function. The receiver can receive and open the shared file by using the electronic device 200. The system can dynamically adjust permission of applications to access different functions of the system based on the permission control policy specified in the file. For example, the receiver can be managed and controlled not to perform an operation such as re-forward, copy, screenshot, or print on the file. Even if an attacker attacks an application that opens the file, the attacker cannot perform the foregoing operations on the file. In this way, improvement is implemented in aspects of scenario support, security, and ecosystem friendliness, and user experience is better.

The following first describes a communication system according to an embodiment of this application.

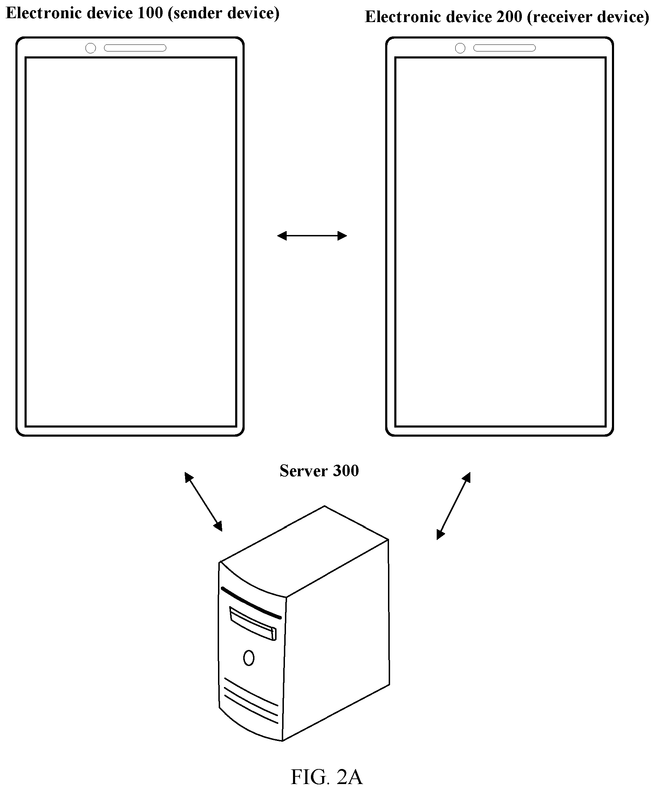

**FIG. 2A** **shows an example of a communication system according to an embodiment of this application.**

With reference to FIG. 2A, the communication system may include an electronic device 100 (a sender device), an electronic device 200 (a receiver device), and a server 300.

Both the electronic device 100 and the electronic device 200 are terminal devices, and may be of various types. This is not limited in this embodiment of this application.

For example, the electronic device 100, that is, the sender device (or referred to as a sharing-party device) may be a mobile phone, a large screen, a tablet, a personal computer (Personal Computer, PC), an in-vehicle infotainment, a watch, a band, or a virtual reality device (Virtual Reality, VR)/an augmented reality device (Augmented Reality, AR).

In this embodiment of this application, the electronic device 100 may provide system-level file encryption, management and control, and sharing functions, and does not depend on an application that needs to be installed on the electronic device 100. For details, refer to related content in subsequent embodiments.

For example, the electronic device 200, that is, the receiver device may be a mobile phone, a large screen, a tablet, a PC, an in-vehicle infotainment, a watch, a band, or VR/AR.

In this embodiment of this application, the electronic device 200 may provide a data management and control function, and the system may dynamically adjust, based on a permission management and control policy specified in a shared file, permission for an application to access different functions of the system. For details, refer to related content in subsequent embodiments.

The server 300 may be a conventional server or a cloud server. This is not limited in this embodiment of this application.

In this embodiment of this application, the server 300 may be configured to store a mapping relationship table between an identity of a user and a credential.

The electronic device 100 in the communication system and the electronic device 200 establish a wired connection or another wireless connection, for example, a Bluetooth communication connection, a wireless local area network (wireless local area network, WLAN) connection such as a wireless fidelity point-to-point (wireless fidelity point to point, Wi-Fi P2P) connection, a near-field wireless communication (near-field communication, NFC) connection, an infrared (infrared, IR) connection, or a remote connection (for example, a remote connection established by using a server), or may be connected to and communicate with each other in combination with any of the foregoing manners.

The electronic device 100 and the electronic device 200 in the communication system may be configured with different software operating systems (Operating System, OS), including but not limited to HarmonyOS^{®}, Android^{®}, iOS^{®}, Windows^{®}, Linux^{®}, and the like. HarmonyOS^{®} is Huawei's HarmonyOS. The electronic device 100 and the electronic device 200 may also be configured with a same software operating system. For example, HarmonyOS^{®} may be configured for both the electronic device 100 and the electronic device 200.

It should be understood that FIG. 2A is merely a diagram of an architecture of the communication system, and should not constitute a limitation on this application. Quantities of electronic devices 100, electronic devices 200, and servers 300 included in the communication system are not limited in this embodiment of this application.

The following describes a software architecture of the electronic device 100 according to an embodiment of this application.

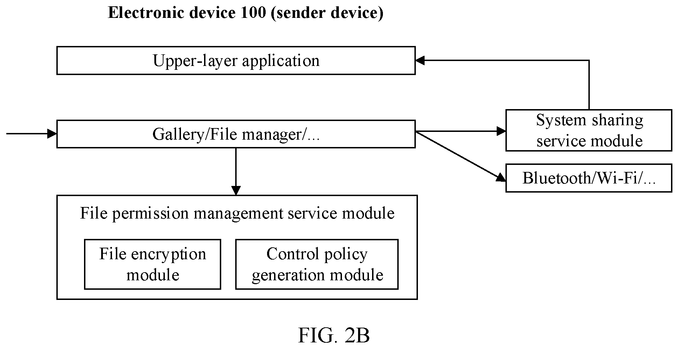

**FIG. 2B** **shows an example of a software architecture of an electronic device 100.**

With reference to FIG. 2B, the electronic device 100 may include one or more applications (for example, an application such as Gallery/File manager), a file permission management service module, a system sharing service module, and a communication module such as Bluetooth/Wi-Fi.

The one or more applications may be a system application, or may be a third-party application.

In some examples, an upper-layer application may not include an application such as Gallery/File manager. For example, the upper-layer application may be an application that can perform an operation such as access and sharing on a file in the application such as Gallery/File manager.

In some other examples, the upper-layer application may also include an application such as Gallery/File manager.

The application such as Gallery/File manager may be used to provide a file access entry, provide a file selector, receive a file selection event, provide a file path, present a file, and the like.

The file permission management service module may be configured to encrypt a file, generate a permission control policy of the file, and the like.

The file permission management service module may include a file encryption module and a control policy generation module.

The file encryption module may be configured to obtain a credential for an identity of a specified receiver, receive a permission control policy of a file, encrypt content of the file and the permission control policy of the file by using the credential, and generate a file ciphertext with the permission control policy, and the like.

The control policy generation module may be configured to receive a permission control configuration operation performed by a user on a file, to generate a permission control policy of the file, and the like.

The system sharing service module may be configured to provide a system-level data sharing function.

The communication module such as Bluetooth/Wi-Fi may be configured to provide a communication function of the electronic device 100. For example, the electronic device 100 may send a to-be-shared file to the electronic device 200 by using the communication module such as Bluetooth/Wi-Fi.

It can be understood that FIG. 2B is merely an example, and should not be construed as any limitation on the software architecture of the electronic device 100 in embodiments of this application.

The following describes a software architecture of the electronic device 200 according to an embodiment of this application.

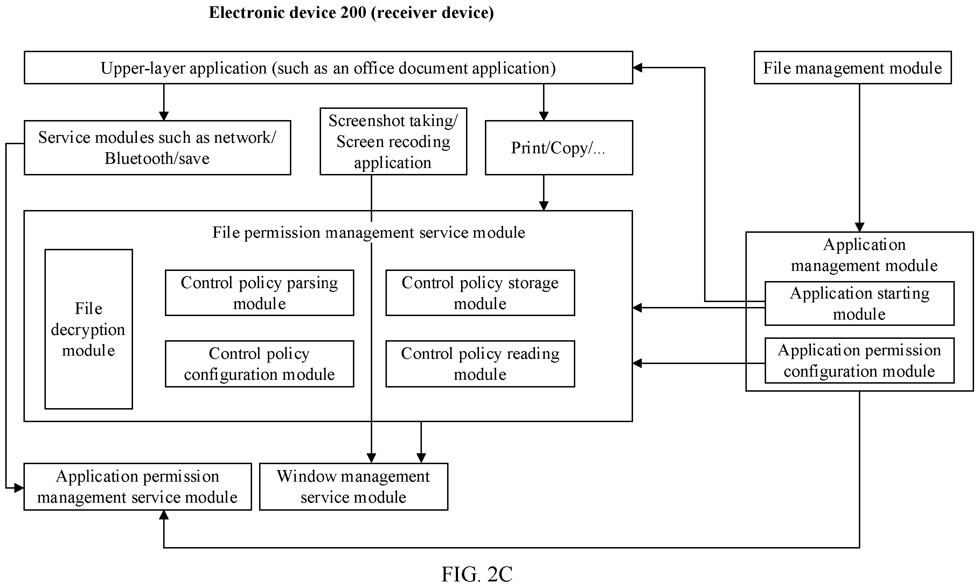

**FIG. 2C** **shows an example of a software architecture of an electronic device 200.**

With reference to FIG. 2C, the electronic device 200 may include an upper-layer application (for example, an office document application), a file management module, an application permission management service module, a file permission management service module, an application management module, a service module such as network/Bluetooth/save, a screenshot/screen recording application, a service module such as print/copy, and a window management service module.

The upper-layer application may be used to open a file (for example, a file shared by the electronic device 100). The upper-layer application may be a system application, or may be a third-party application. For example, the upper-layer application may be an office document application, or may be an application such as Gallery or File manager.

The file management module (for example, a file management application) may be configured to provide a file path, determine a file attribute (for example, determine whether the file is a controlled shared file), and the like.

The application permission management service module may be configured to provide a universal permission management capability of a system, and provide a permission management determining capability when an application uses one or more functions. In this embodiment of this application, the application permission management service module may be further configured to provide a dynamic permission setting capability when an application opens a file and a dynamic management and control capability when an application performs an operation; and may be further configured to receive a permission control policy that is configured by the application management module for a specific application identifier (for example, an application identifier 11).

The file permission management service module may be configured to decrypt a received file, and perform an operation such as parse, configure, save, and read on a permission control policy of the file.

The file permission management service module may include a file decryption module, a control policy parsing module, a control policy configuration module, a control policy storage module, and a control policy reading module.

The file decryption module may be configured to obtain a credential for an identity of a receiver, decrypt a file ciphertext (for example, decrypt file content and decrypt a permission control policy of a file), and the like.

The control policy parsing module may be configured to parse the permission control policy of the decrypted file, generate a parsing result, and the like.

The control policy configuration module may be configured to provide a capability of configuring the parsing result, and the like.

The control policy storage module may be configured to provide a capability of storing the parsing result, and the like.

The control policy reading module may be configured to read the parsing result, provide a capability of querying the parsing result, and the like.

The application management module may be configured to start an application, configure permission of the application, and the like.

The application management module may include an application starting module and an application permission configuration module.

The application starting module may be configured to start an application by using an independent process based on an application result selected by a user, allocate an application identifier, and the like.

The application permission configuration module may be configured to determine whether the file is an encrypted and controlled file, obtain the permission control policy for the file from the file permission management service module, and configure the permission control policy for the application identifier to the application permission management service module.

The service module such as network/Bluetooth/save may be configured to: when an application initiates access to the service module such as network/Bluetooth/save, determine, based on the permission control policy, whether to allow access, and the like. For example, if a current application is an application (which may also be referred to as a common application) that does not open a controlled file, management and control or granting may be performed based on a regular permission authorization record. For another example, if a current application is an application that opens a controlled file, management and control or granting may be performed based on a permission control policy dynamically configured when a file is opened.

The screenshot/screen recording application may be configured to perform a screenshot operation, a screen recording operation, and the like on file content.

The service module such as print/copy is configured to: when an application initiates access to the service module such as print/copy, determine, based on a permission control policy, whether to allow access. For example, if the current application is the application that does not open the controlled file, granting may be directly performed when there is no special limitation in the system. For another example, if the current application is the application that opens the controlled file, a decision result indicating whether granting is allowed may be obtained from the file permission management service module, and management and control or granting is performed based on the decision result.

The window management service module may be configured to manage a window program. The window management service module may obtain a size of a display, take a screenshot, and the like.

It can be understood that FIG. 2C is merely an example, and should not be construed as any limitation on the software architecture of the electronic device 200 in embodiments of this application.

The following describes in detail the data sharing method provided in embodiments of this application with reference to a series of example user interfaces.

For a sender (or referred to as a sharing party), in this embodiment of this application, the electronic device 100 may support a user in initiating sharing by using a system, or may support a user in initiating sharing by using a communication application.

For a receiver, in this embodiment of this application, the electronic device 200 may support a user in receiving and opening a shared file by using a system, or may support a user in initiating sharing, receiving, and opening a shared file by using a communication application.

**Scenario 1: Initiate sharing through a system.**

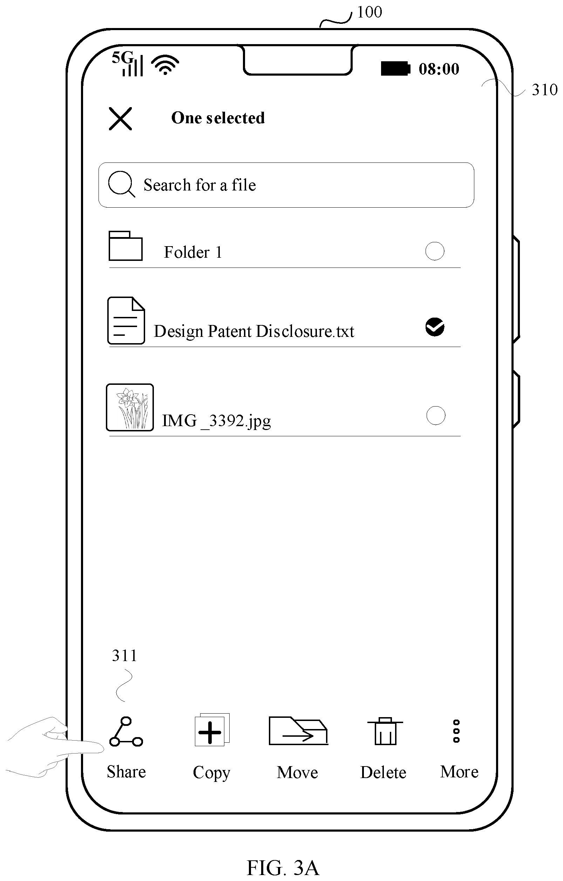

With reference to FIG. 3A, a user interface 310 shown in FIG. 3A as an example may be a user interface used by a user to select a file/folder in a system. The user interface 310 may include a file management list and one or more options (for example, a share option 311, a copy option, a move option, a delete option, and a more option). The file management list may include one or more files (for example, a document "Design Patent Disclosure.txt" and an image "IMG_3392.jpg") and one or more folders (for example, a folder 1). The share option 311 may be used to directly share a selected file/folder.

In this embodiment of this application, the electronic device 100 may support a user in selecting a file/folder in a system. A file/folder selection entry may include but is not limited to an application entry that can display a file, such as Gallery or File manager. A file/folder selection operation may include but is not limited to a touch and hold operation, a tap operation, a drag operation, and the like. There may be one or more selected files/folders.

For example, the electronic device 100 is a mobile phone. The electronic device 100 may support the user in selecting one or more files/folders by using the touch and hold operation. For example, still with reference to FIG. 3A, it can be learned that the document "Design Patent Disclosure.txt" is in a selected state. In other words, the user selects the document "Design Patent Disclosure.txt" as a to-be-shared file.

It is easy to understand that, if the electronic device 100 is a PC, one or more files/folders may be selected by using an accessory device such as a mouse or a keyboard.

Still with reference to FIG. 3A, when a system of the electronic device 100 perceives that a file/folder is in a selected state, the electronic device 100 may display a share option 311. The electronic device 100 may detect an operation (for example, a tap operation) of the user on the share option 311. In response to the operation, the electronic device 100 may display a window 320 shown in FIG. 3B as an example.

With reference to FIG. 3B, the window 320 may include an encrypted share option 321.

It is easy to understand that the user may perform an operation (for example, a tap operation) on the encrypted share option 321, to trigger the electronic device 100 to perform the data sharing method provided in this embodiment of this application.

In some examples, with reference to FIG. 3C, when a system of the electronic device 100 perceives that a file/folder is in a selected state, the electronic device 100 may also directly display the encrypted share option 321.

In some other examples, if the electronic device 100 is a PC, when a system of the electronic device 100 perceives that a file/folder is in a selected state, the electronic device 100 may also directly display the encrypted share option 321, and may further support the user in clicking a right mouse button or another menu bar to display the encrypted share option 321.

In this embodiment of this application, after detecting that the user performs an operation on the encrypted share option 321, the electronic device 100 may perceive a login status of a local account. If the user does not log in to the account, the electronic device 100 may guide the user to log in to the account in an interface display manner. If the user has logged in to the account, the electronic device 100 may directly display a related user interface used for subsequent data sharing, but does not display a user interface used to guide the user to log in to the account.

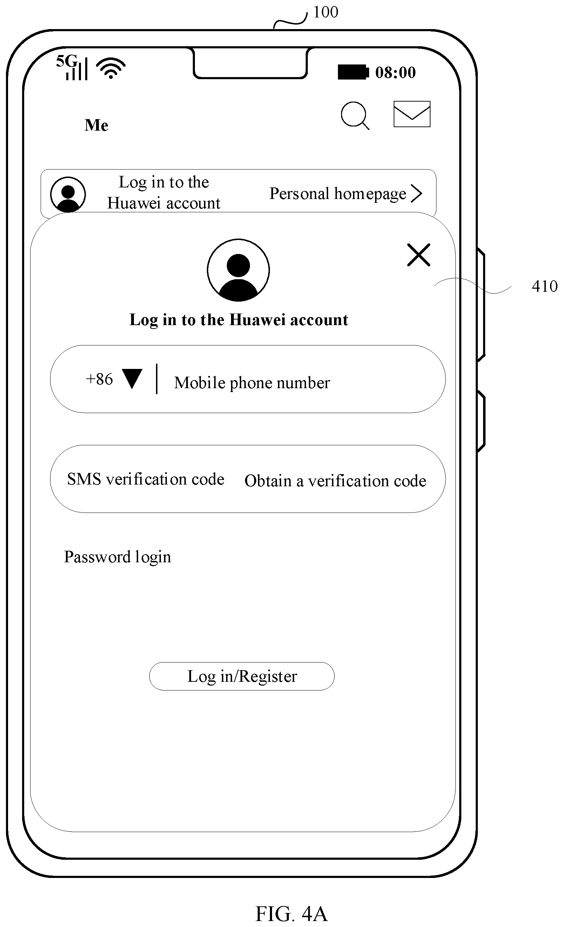

For example, with reference to FIG. 4A, when it is detected that a user does not log in to an account (for example, a Huawei account), the electronic device 100 may display a window 410 shown in FIG. 4A as an example. The window 410 may be used to support the user in logging in to the account by manually inputting a mobile phone number and an SMS verification code.

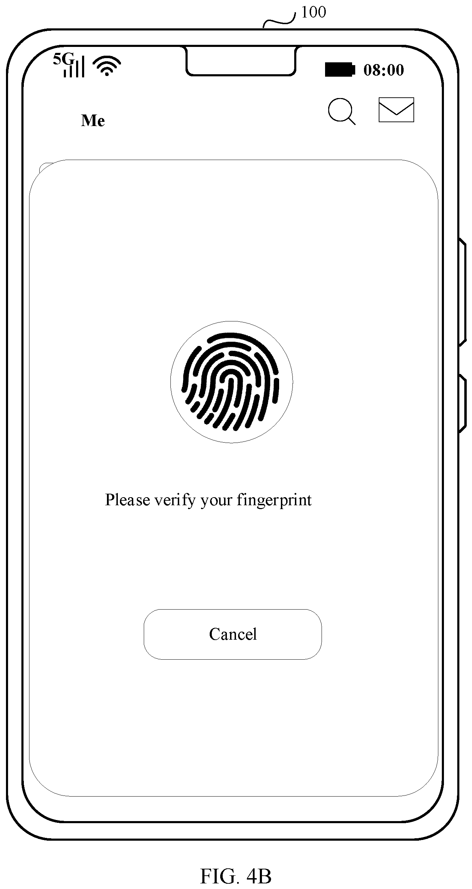

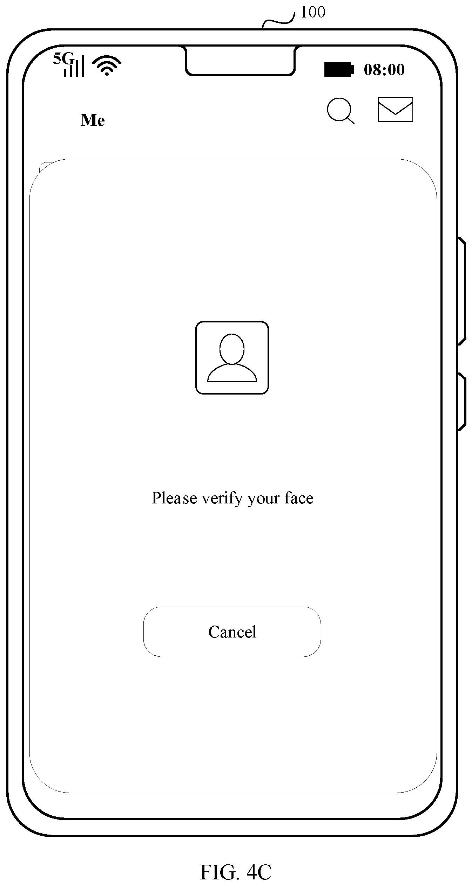

In some examples, the electronic device 100 may also support the user in logging in to the account in another manner. For example, the user may log in to the account in a fingerprint verification manner shown in FIG. 4B as an example. For another example, the user may log in to the account in a face verification manner shown in FIG. 4C as an example. For still another example, the user may log in to the account in an account password login manner. For still another example, the user may log in to the account in a code scanning login manner.

Optionally, before the user performs an encrypted share operation, if the electronic device 100 has verified an identity of the user by using a user account or a biometric feature such as a fingerprint/face and considers that the identity is trusted, the electronic device 100 may not need to require the user to input credential information again after the user selects encrypted sharing. Optionally, the user may also complete cross-device authentication by using another associated device such as a wearable device, without performing authentication by using the electronic device 100.

In this embodiment of this application, after detecting that the user logs in to the account, the electronic device 100 may display a user interface used to guide the user to select an identity of a receiver. The identity may include but is not limited to an index that can be used to identify the identity of the user, for example, a mobile phone number, an email address, or an account ID of the receiver.

A manner of selecting the identity of the receiver may include but is not limited to the following three manners:
Manner 1: Manually input the identity of the receiver.

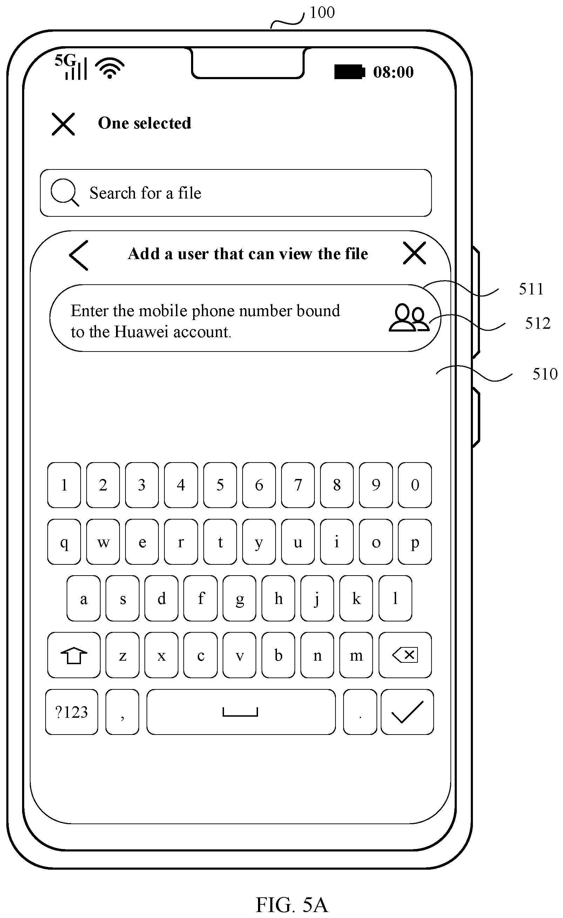

For example, with reference to FIG. 5A, the electronic device 100 may display a window 510, the window 510 may include an input box 511, and the electronic device 100 may support the user in inputting the mobile phone number of the receiver into the input box 511.

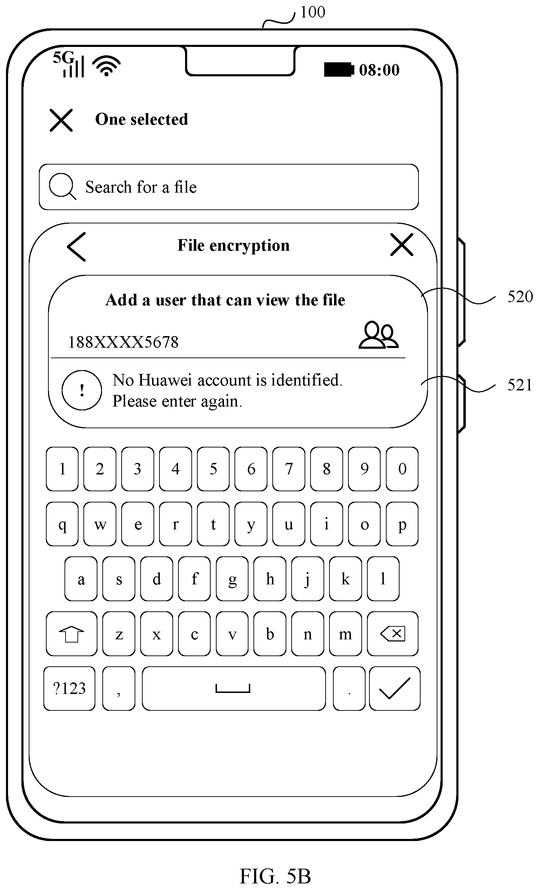

In some examples, after detecting that the user inputs the mobile phone number of the receiver, the electronic device 100 may identify whether the mobile phone number is bound to the Huawei account. If the mobile phone number is not bound to the Huawei account, the electronic device 100 may display a window 520 shown in FIG. 5B as an example. The window 520 may include prompt information 521 (for example, "No Huawei account is identified. Please enter again"). The prompt information 521 may be used to prompt the user to input again the mobile phone number bound to the Huawei account.

In this embodiment of this application, the electronic device 100 may support the user in inputting an identity of one or more receivers.

Manner 2: Select the identity of the receiver from an address book.

Still with reference to FIG. 5A, an input box 511 may include an option 512, and the option 512 may be used to trigger the electronic device 100 to display a related user interface of the address book, to support the user in selecting the identity of the receiver from the address book.

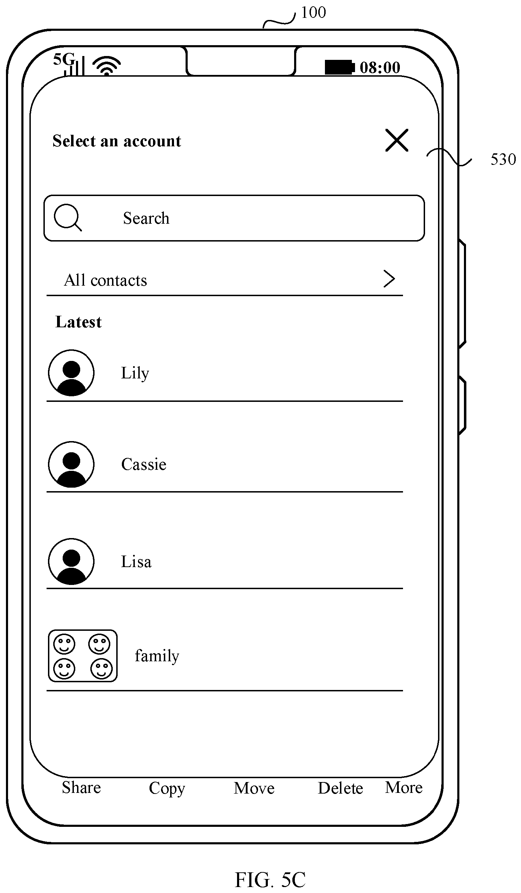

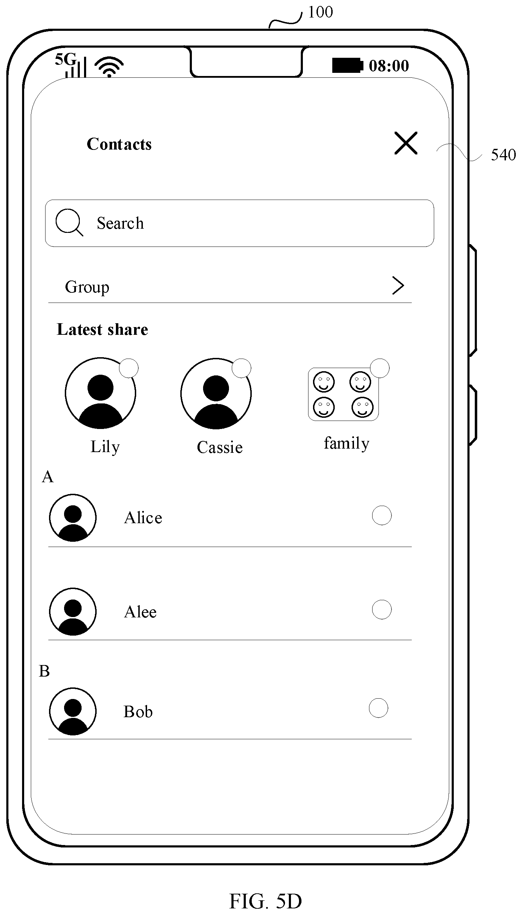

For example, the electronic device 100 may detect an operation (for example, a tap operation) performed by the user on the option 512. In response to the operation, the electronic device 100 may display a window 530 shown in FIG. 5C as an example or a window 540 shown in FIG. 5D as an example. Both the window 530 and the window 540 may include a receiver list. The receiver list may include information (for example, information such as a name and a profile image) about one or more receivers. The user may perform an operation (for example, a tap operation) on the receiver list, to select the identity of the receiver.

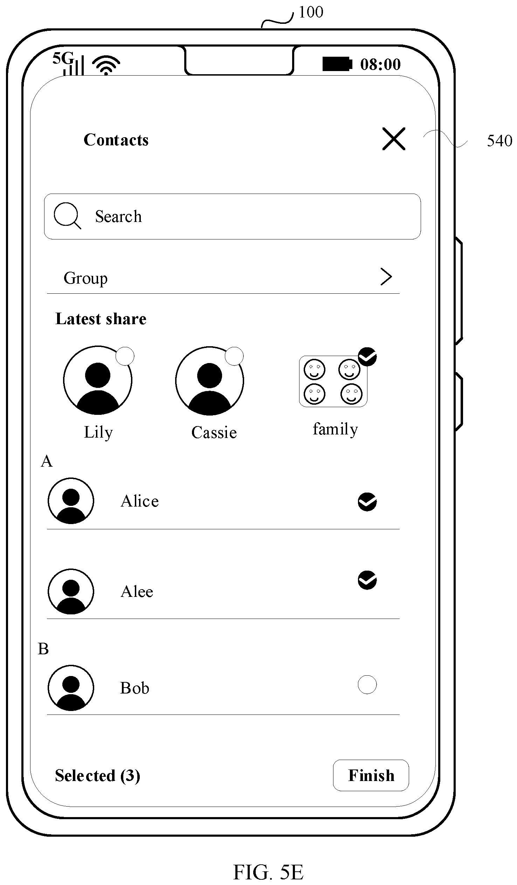

In this embodiment of this application, the electronic device 100 may support the user in selecting an identity of one or more receivers. For example, with reference to FIG. 5E, it can be learned that the user selects three receivers.

It should be noted that in this embodiment of this application, the receiver may be a user, or may be a group.

Manner 3: Select the identity of the receiver from a near-field device.

The electronic device 100 may discover a nearby device based on Bluetooth, Wi-Fi, or another near-field communication method, and may display a device list 551 in a window 550 shown in FIG. 5F as an example. Information displayed in the device list 551 may include but is not limited to one or more of the following: a device name, a user name, and a profile image. The electronic device 100 may support the user in selecting, from the device list 551, user equipment (that is, a receiver device) which the user needs to interact with. Further, the electronic device 100 may obtain, by using the near-field communication method, the identity of the receiver corresponding to the selected user equipment that the user needs to interact with.

In this embodiment of this application, after detecting the identity of the receiver selected by the user, the electronic device 100 may obtain an identity credential (a public key or a symmetric key) of the receiver based on the identity of the receiver selected by the user.

A manner of obtaining the identity credential of the receiver may include but is not limited to the following three manners:
Manner 1: Obtain the identity credential from a server.

A server side (that is, a cloud side) may store a mapping relationship table (for example, a mapping relationship table shown in Table 1) between an identity of a receiver and a credential. An electronic device side (that is, a terminal side) may upload the identity of the receiver to the server side. The server side may determine, based on the mapping relationship table between an identity of a receiver and a credential, the credential corresponding to the identity, and deliver the credential to the electronic device side.

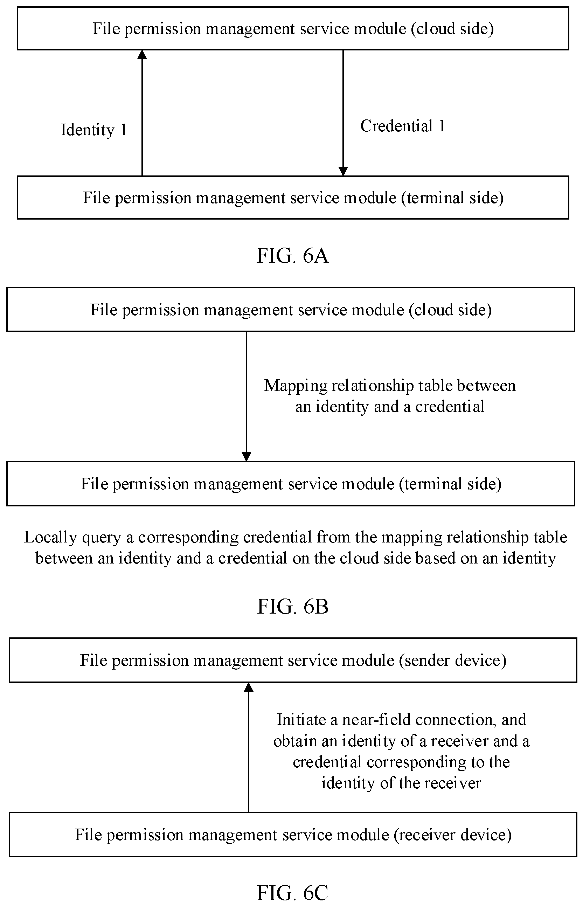

For example, with reference to FIG. 6A, the file permission management service module of the electronic device 100 may upload an identity 1 selected by the user to a file permission management service module of the server. The file permission management service module of the server may determine, based on the mapping relationship table between an identity of a receiver and a credential, that a credential corresponding to the identity 1 is a credential 1, and deliver the credential 1 to the electronic device 100.

**Table 1**

| **Identity** | **Credential** |
|---|---|
| Identity 1 | Credential 1 |
| Identity 2 | Credential 2 |

Manner 2: Obtain the identity credential locally.

The electronic device side (that is, the terminal side) may synchronize the mapping relationship table between an identity of a receiver and a credential on the server side (that is, the cloud side), store the mapping relationship table locally, and locally obtain the identity credential of the receiver based on the identity selected by the user and the mapping relationship table between the identity of the receiver and the credential.

For example, with reference to FIG. 6B, the file permission management service module of the server may deliver the mapping relationship table between an identity of a receiver and a credential to the electronic device 100. The file permission management service module of the electronic device 100 may store the mapping relationship table between an identity of a receiver and a credential. Further, the file permission management service module of the electronic device 100 may query, based on the identity selected by the user and the mapping relationship table between an identity of a receiver and a credential, the credential corresponding to the identity.

Manner 3: Obtain the identity credential from a near-field device.

The electronic device 100 (a sender device) may initiate a connection to the electronic device 200 through near-field communication, and may obtain, based on the connection, the identity and the credential of the receiver corresponding to the electronic device 200 (the receiver device).

For example, with reference to FIG. 6C, the file permission management service module of the electronic device 100 may obtain, based on a near-field connection, the identifier and the credential of the receiver corresponding to the electronic device 200 that are stored in the file permission management service module of the electronic device 200.

In this embodiment of this application, after obtaining the identity credential of the receiver, the electronic device 100 may perform, based on the credential, permission protection on a file selected by the user. A permission protection manner may include but is not limited to the following three types:
Manner 1: Provide only a "read-only" function for the file by default.

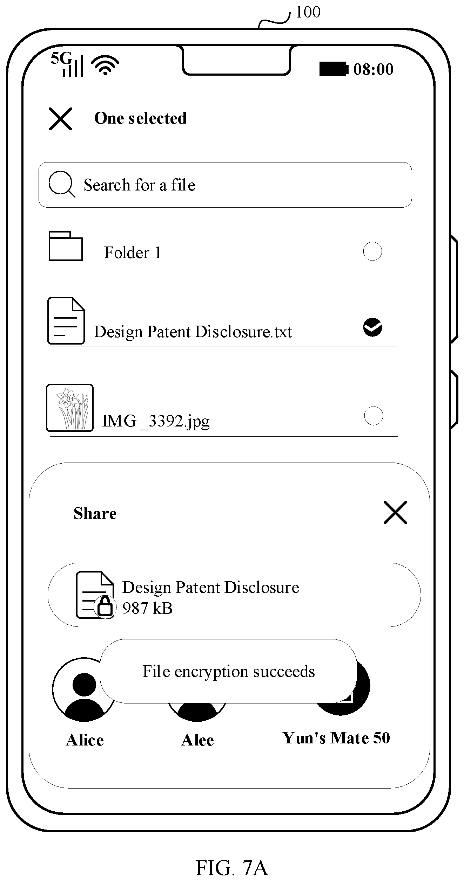

The electronic device 100 may set, by default, permission of the file selected by the user to "read-only" permission or a permission range preconfigured by the user, with no need of user confirmation. For example, with reference to FIG. 7A, after the "read-only" permission is set, the electronic device 100 may display related prompt information (for example, "The file is successfully encrypted"), to inform the user that the file selected by the user has been encrypted.

Manner 2: Prompt the user to confirm whether to add the "read-only" permission, and complete encryption after the user confirmation.

For example, with reference to FIG. 7B, the electronic device 100 may display a window 710. The window 710 may be used to prompt the user to confirm whether to add the "read-only" permission to the selected file. After detecting that the user confirms to add the "read-only" permission to the selected file (for example, the user taps a "Yes" option in the window 710), the electronic device 100 may add the "read-only" permission to the file selected by the user, to complete encryption.

Manner 3: Provide a permission setting panel to allow the user to set the "read-only" permission and "editable" permission. This may include but is not limited to the following two manners:

### Manner (1)

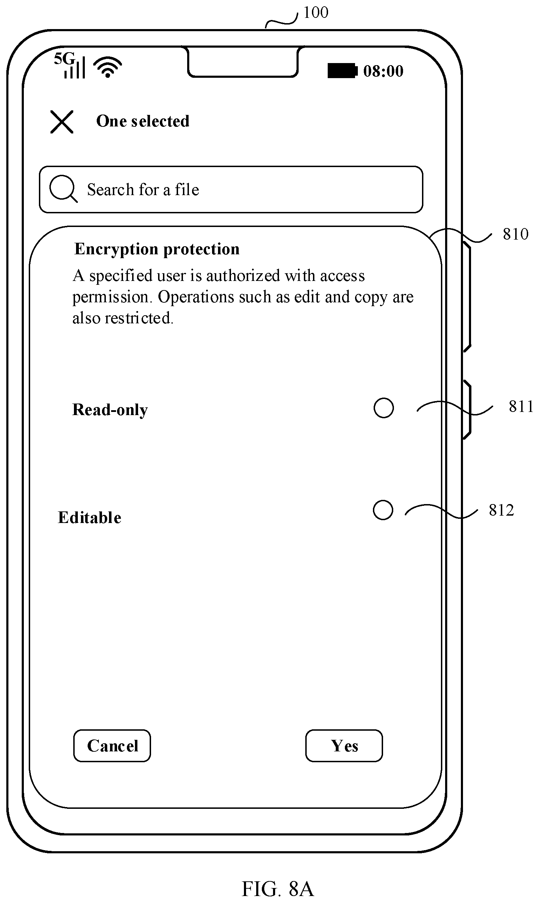

For example, with reference to FIG. 8A, the electronic device 100 may display a window 810, and the window 810 may include a "read-only" permission option 811 and an "editable" permission option 812. The "read-only" permission option 811 may be used to set permission of a selected file to "read-only" permission. The "editable" permission option 812 may be used to set permission of a selected file to "editable" permission. The "editable" permission may include but is not limited to edit, save as, print, transfer, copy, screenshot, and screen recording.

In this embodiment of this application, a same user cannot configure permission of a file as the "read-only" permission and the "editable" permission at the same time. For example, if the electronic device 100 detects that the user chooses to set the permission of the file to the "read-only" permission (for example, the user taps the "read-only" permission option 811), the electronic device 100 may disable all operations that may cause leakage to file content (for example, operations such as forward, copy, save as, screenshot, and print) and operations that may damage integrity of file content (for example, an edit operation). In addition, the "editable" permission option 812 may also be automatically grayed out, and is in a non-selectable state, and does not need to be manually selected by a user.

### Manner (2)

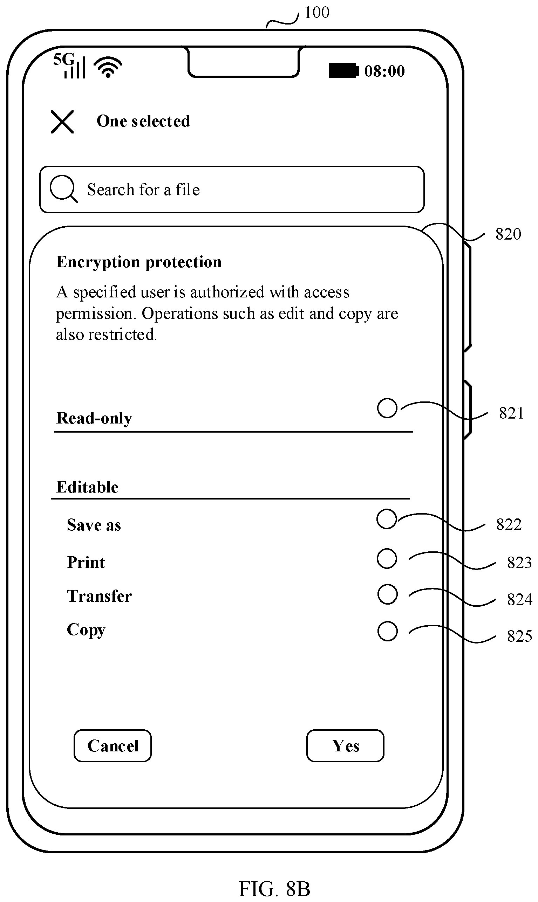

For example, with reference to FIG. 8B, the electronic device 100 may display a window 820. The window 820 may include a "read-only" permission option 821 and one or more refined configuration options (for example, a save-as option 822, a print option 823, a transfer option 824, and a copy option 825) of the "editable" permission. The electronic device 100 may support the user in performing an operation (for example, a tap operation) on the one or more refined configuration options of the "editable" permission, to select and configure an operation that can be performed on a file by using the receiver device.

It is easy to understand that, if there are a plurality of receivers, file permission is set uniformly in the embodiments shown in FIG. 8A and FIG. 8B.

In some examples, if there are a plurality of receivers (for example, a plurality of independent users and a plurality of group members in a specific group), the electronic device 100 may also set different permission of the file for different receivers. In other words, both the "read-only" permission and the "editable" permission of the file may be set for a specified user. When the receiver is a plurality of independent users, the electronic device 100 may set file permission respectively for the plurality of independent users. When the receiver is a group, the electronic device 100 may set file permission respectively for a plurality of group members in the group. When the receiver is a group, the electronic device 100 may alternatively uniformly set file permission of all group members in the group. In this case, the group members may share a same credential. In other words, one group identifier corresponds to one credential. For a process of obtaining the credential, refer to the foregoing related content. Details are not described herein again.

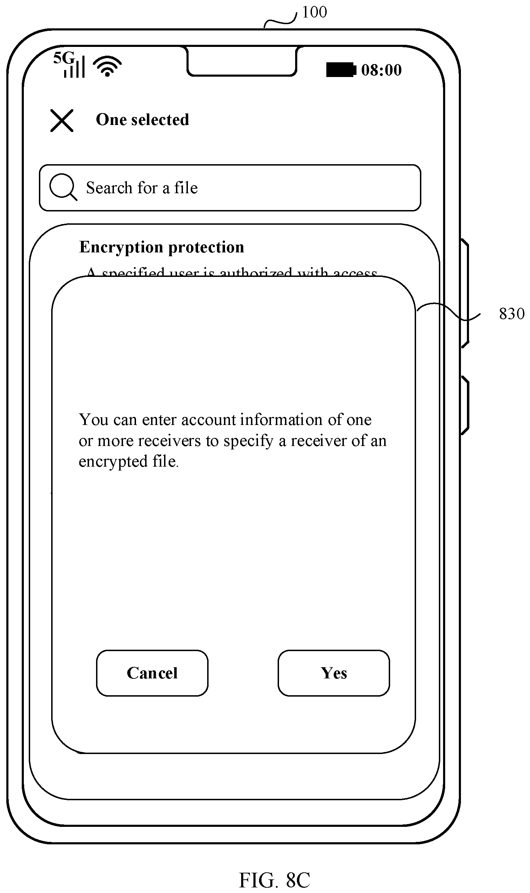

Optionally, with reference to FIG. 8C, the electronic device 100 may display a window 830. The window 830 may be used to prompt the user to input account information of one or more receivers to specify a receiver of an encrypted file.

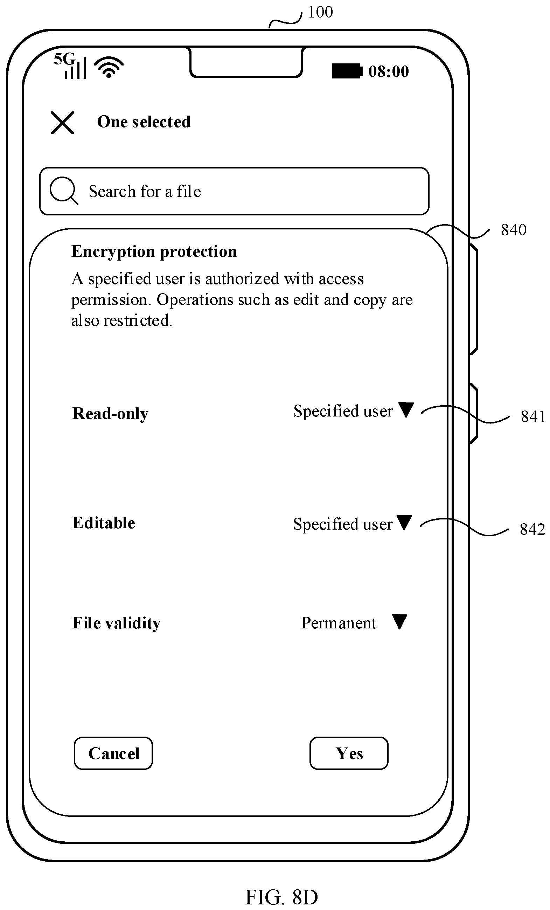

For example, with reference to FIG. 8D, the electronic device may display a window 840. The window 840 may include an option 841 and an option 842. The option 841 may be used to set the "read-only" permission of the file for a specified user. The option 842 may be used to set the "editable" permission of the file for the specified user.

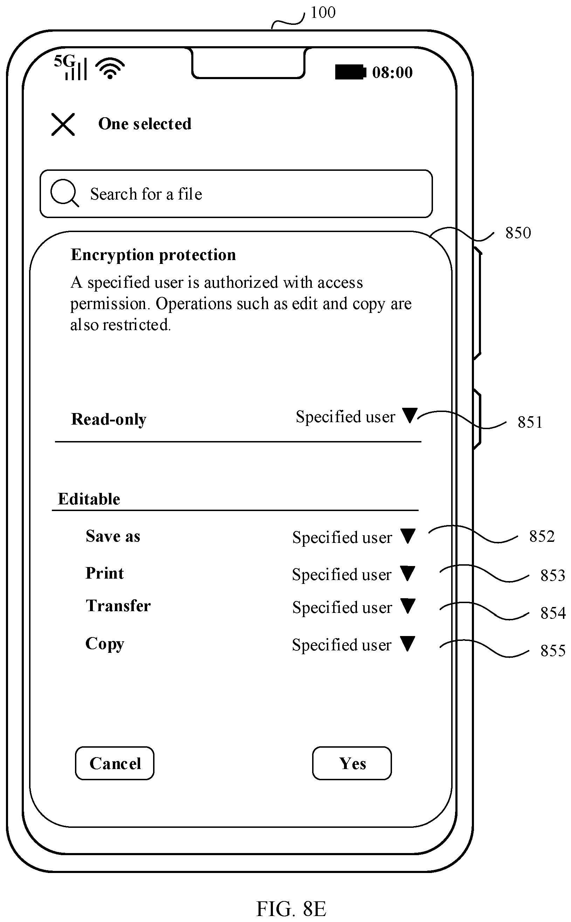

For example, with reference to FIG. 8E, the electronic device may also display a window 850. The window 850 may include an option 851, an option 852, an option 853, an option 854, and an option 855. The option 851 may be used to set the "read-only" permission of the file for the specified user. The option 852 may be used to set the save-as permission in the "editable" permission of the file for the specified user. The option 853 may be used to set the print permission in the "editable" permission of the file for the specified user. The option 854 may be used to set the transfer permission in the "editable" permission of the file for the specified user. The option 855 may be used to set the copy permission in the "editable" permission of the file for the specified user.

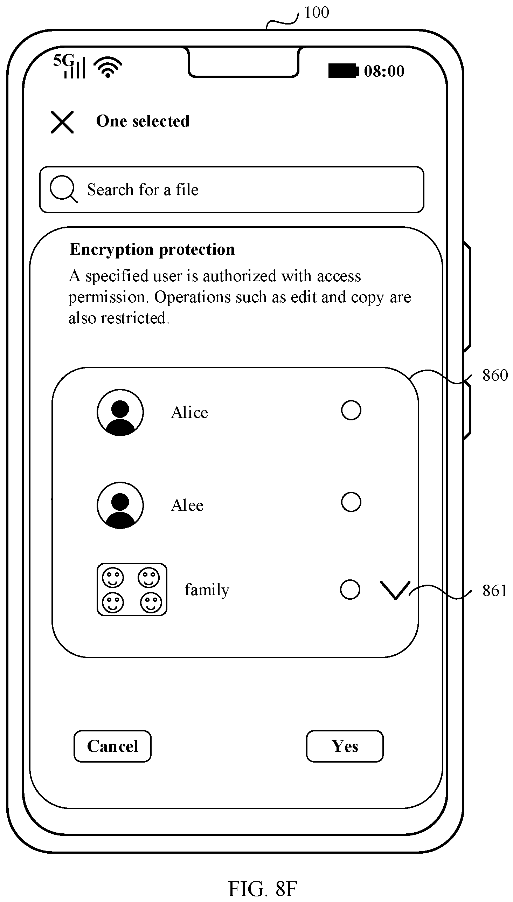

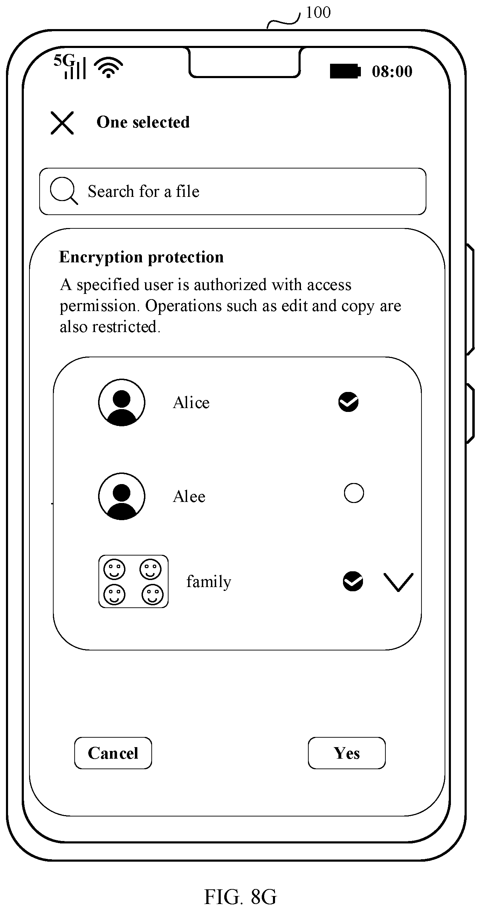

For setting of the specified user, for example, the "read-only" permission of the file is set for the specified user. The electronic device 100 may detect an operation (for example, a tap operation) of the user on the option 841 shown in FIG. 8D or the option 851 shown in FIG. 8E. In response to the operation, the electronic device 100 may display a window 860 shown in FIG. 8F as an example. The window 860 may display one or more receivers selected by the user. The electronic device 100 may support the user in selecting the one or more receivers for permission setting. For example, with reference to FIG. 8G, it can be learned that a user Alice and a group family are in a selected state. In other words, the user Alice and the group family are selected as designated users of the "read-only" permission of the file, and the user Alice and the group family have the "read-only" permission of the file. It is easy to understand that setting the "editable" permission of the file for the specified user is similar to setting the "read-only" permission of the file for the specified user. Details are not described herein again.

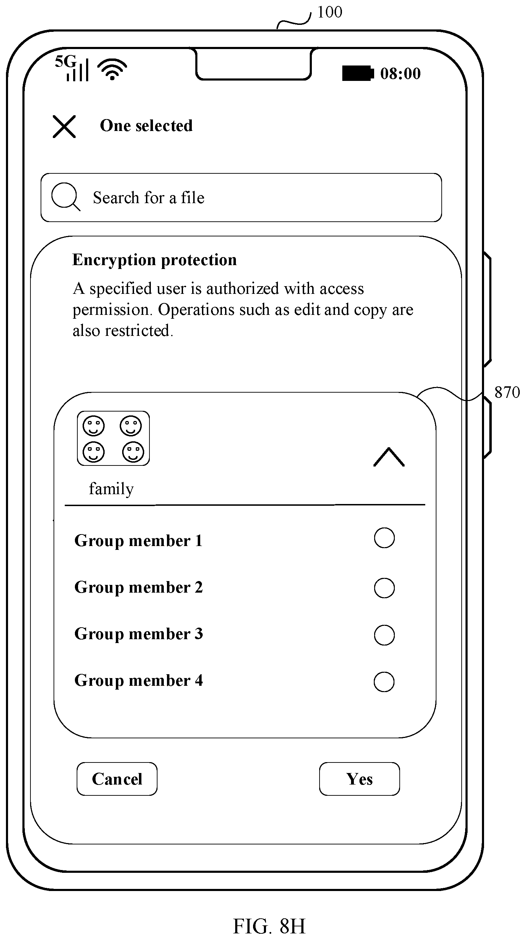

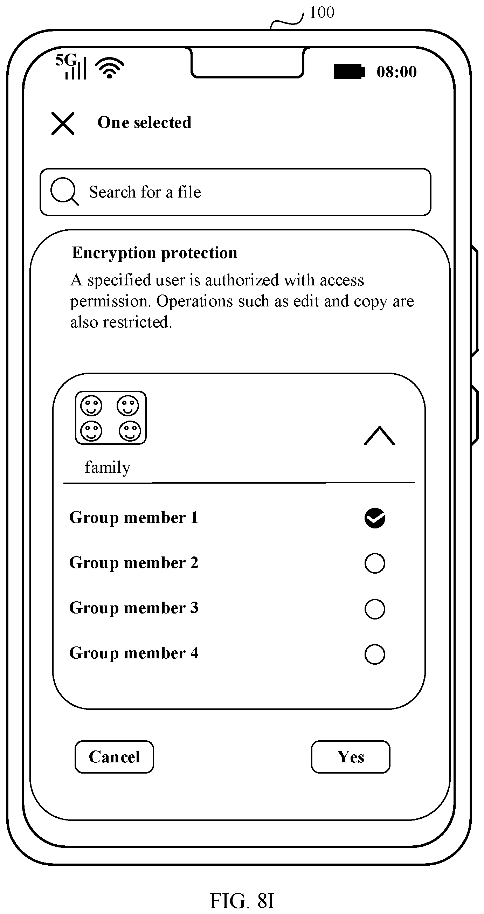

It is easy to understand that, in the embodiment shown in FIG. 8G, for the group family, permission set for all group members in the group are the same. In some examples, the electronic device 100 may also support the user in setting corresponding permission respectively for each group member in the group. Still with reference to FIG. 8F, the "read-only" permission is also used as an example. The electronic device 100 may detect an operation (for example, a tap operation) performed by the user on an option 861. In response to the operation, the electronic device 100 may display a window 870 shown in FIG. 8H as an example. The window 870 may include one or more group members (for example, a group member 1, a group member 2, a group member 3, and a group member 4) in the group family. The electronic device 100 may support the user in selecting one or more group members for permission setting. For example, with reference to FIG. 8I, it can be learned that the group member 1 is in a selected state. In other words, the group member 1 is selected as the specified user of the "read-only" permission of the file, and the group member 1 has the "read-only" permission of the file.

In this embodiment of this application, when the user has selected a plurality of files, the electronic device 100 may support the user in performing permission protection separately on the plurality of files, or may support the user in combining the plurality of files into one independent file for unified permission protection.

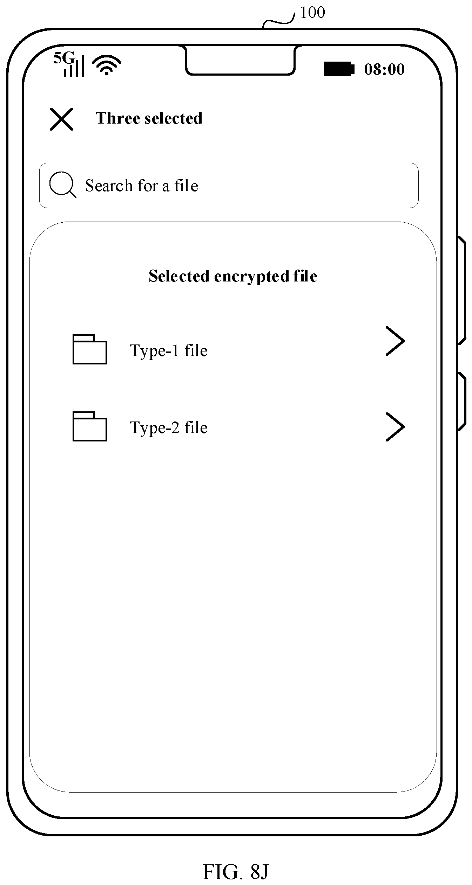

In some examples, for files of a same type, permission protection manners of the files may be the same. In this way, for a plurality of files of a same type, the user may uniformly set permission for the files, thereby simplifying a user operation. For example, with reference to FIG. 8J, files selected by the user may be classified into two types of files (for example, a type-1 file and a type-2 file). The user may tap the type-1 file or the type-2 file to trigger the electronic device 100 to perform permission protection on the files. For a specific process, refer to the foregoing related content of permission protection. Details are not described herein again.

The following describes a possible specific implementation mechanism of permission protection.

After detecting a permission protection attribute (for example, read-only or editable) of a file selected by the user, the electronic device 100 may encapsulate the permission protection attribute configured by the user into a field description as a permission definition of the file. Further, the electronic device 100 may encrypt file content and the permission definition based on the identity credential of the receiver. An encryption manner may include but is not limited to the following two types:

### Manner 1

The permission definition is inserted into the file content, an insertion result (that is, the file content and the permission definition are considered as an entity) is encrypted, and a ciphertext is used as new file content.

### Manner 2

The permission definition and the file content are separately encrypted, a ciphertext is used as new file content, and a ciphertext of the permission definition is written into metadata of the file.

In some examples, the permission definition may not follow the file associated with the permission definition. For example, the electronic device 100 may upload the permission definition and an ID of the file associated with the permission definition to the server, and the server may store a mapping relationship table between a permission definition and a file ID. After receiving the file, the receiver may obtain, from the server, the permission definition corresponding to the file.

For an encrypted file, a file name extension may be changed or not.

When the file name extension is changed, a dedicated extension (for example, .a) may be set. For example, an original file may be file 1.docx, and file 1.docx.a may be obtained after a permission definition and file content of the file are encrypted. It is easy to understand that the extension .a is merely an example, and should not constitute limitation.

When the file name extension is not changed, for example, an original file may be file 1.docx, and file 1.docx remains after encryption. The encrypted file content may include a permission definition ciphertext and a file content ciphertext of the file.

After encryption is completed, an encryption result may be generated. The encryption result may include an encrypted file and an index corresponding to the encrypted file. The index corresponding to the encrypted file may include but is not limited to an index that may be used to obtain file information, for example, a file path, a file address, and a file handle.

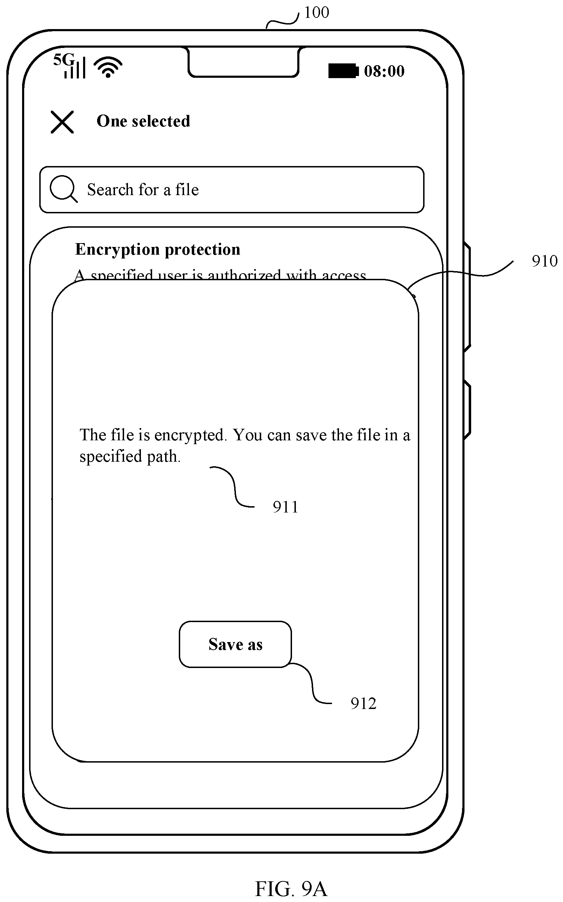

In this embodiment of this application, after encryption is completed, the electronic device 100 may display a window 910 shown in FIG. 9A. The window 910 may include prompt information 911 and an option 912. The prompt information 911 may be used to inform the user that a file is encrypted. The file may be saved to a specified path. The option 912 may be used to save the file to a specified path. After the user taps the option 912, the electronic device 100 may be triggered to display a storage path. The user may manually select a new storage path to trigger the electronic device 100 to store a file with set permission protection in the path.

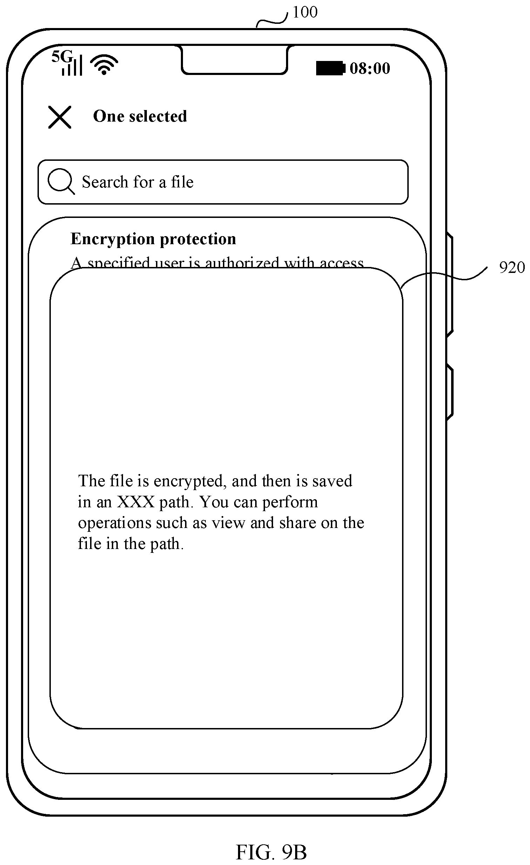

In some examples, after encryption is completed, the electronic device 100 may also store the file in a default path, for example, an XXX path, and may display a window 920 shown in FIG. 9B as an example. The window 920 may include related prompt information to inform the user that the file is stored in the XXX path.

In this embodiment of this application, after the file (that is, the foregoing encrypted file) with permission protection is stored, the electronic device 100 may support the user in performing a share operation on the file. Performing the share operation may include but is not limited to the following two manners:

### Manner 1

After the file with permission protection is stored, the electronic device 100 may directly locally obtain a path of the file or an index of another type and initiate sharing. A sharing manner may include but is not limited to the following two types:
Manner (1): Perform near-field sharing based on a sharing service provided by a system.

For example, with reference to FIG. 5F, the electronic device 100 may display the device list 551, and support the user in selecting a device in the device list 551 as a receiver device, so that the file with permission protection can be sent to the receiver device to complete sharing.

Manner (2): Perform sharing through an application.

For example, still with reference to FIG. 5F, the electronic device 100 may display the application list 552. The application list 552 may include one or more applications that can perform file sharing. The electronic device 100 may support the user in selecting an application in the application list 552 to share a file with a receiver device.

It is easy to understand that the foregoing two sharing manners are merely examples, and a sharing manner of a file with permission protection may be consistent with a sharing manner of an ordinary file. This is not limited in this embodiment of this application.

### Manner 2

After the file with permission protection is stored, the electronic device 100 may support the user in reselecting the file in a new storage path corresponding to the file and initiating sharing. It is easy to understand that a method for selecting and sharing a file with permission protection may be consistent with a method for selecting and sharing an ordinary file. This is not limited in this embodiment of this application.

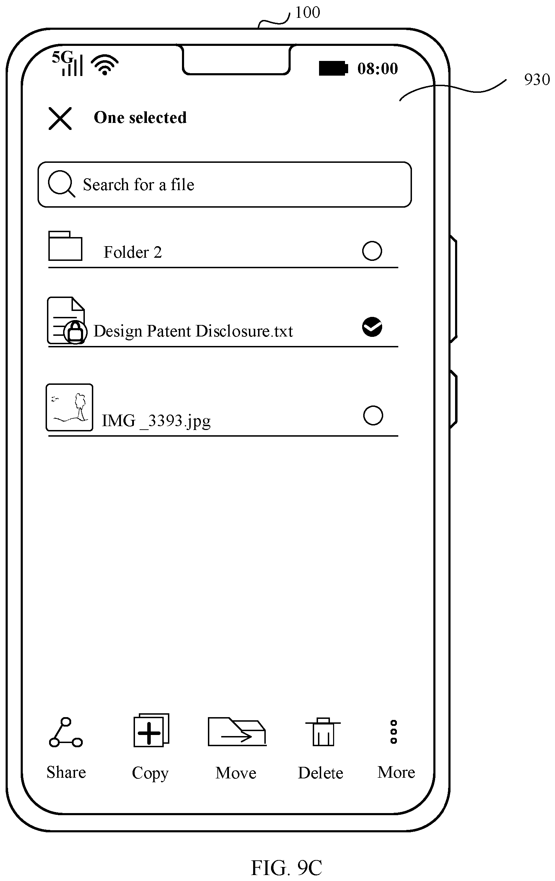

For example, with reference to FIG. 9C, it can be learned that a document "Design Patent Disclosure.txt" displayed in a user interface 930 is a save-as file with permission protection and is in a selected state. The user may trigger the electronic device 100 to share the file by tapping a share option in FIG. 9C.

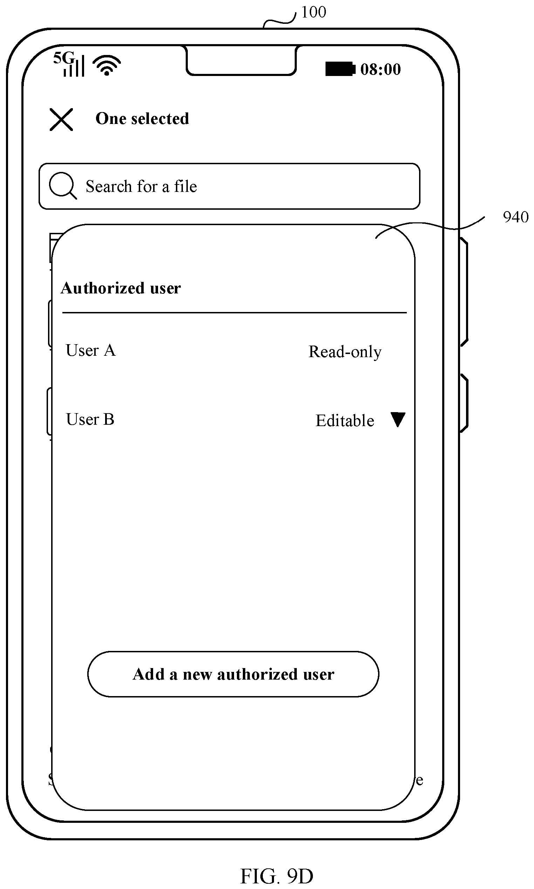

In some examples, when detecting that the file with permission protection is in the selected state, the electronic device 100 may display a window 940 shown in FIG. 9D as an example. The window 940 may be used to display an authorized user of the file and permission of the authorized user (for example, a user A has "read-only" permission, and a user B has "editable" permission).

In some examples, still with reference to FIG. 9D, the electronic device 100 may support the user in adding a new authorized user for the file with permission protection. For example, the user may tap an "Add a new authorized user" option to trigger the electronic device 100 to perform a related step of adding the new authorized user. For a process of adding the new authorized user, refer to the foregoing related content of selecting a receiver identity and performing permission protection. Details are not described herein again.

It can be learned from the foregoing scenario 1 that, according to the method provided in this embodiment of this application, file encryption setting does not need to be initiated in an application, only a file needs to be selected in a system application entry that has a preview function, such as File manager and Gallery, and the system triggers encrypted sharing of the file (for example, displays an encrypted share option). The electronic device can support a user in using a system function to configure who a file is to be sent to and permission (for example, "read-only" permission and "editable" permission) of a file receiver, and an upper-layer application does not need to perceive encryption of the file, thereby improving ecological friendliness and improving user experience.

**Scenario 2: Initiate sharing through a communication application.**

In this embodiment of this application, the electronic device 100 may support a user in selecting a file by using a communication tool (for example, a communication application such as Chat or Email) that has a sending function and initiating file sharing.

For example, with reference to FIG. 10A, a user interface 1010 shown in FIG. 10A may be a chat interface provided by a chat application. The chat interface may be a chat interface between a user of the electronic device 100 and a user Lily. It is easy to understand that the user Lily may be a file receiver. The electronic device 100 may support the user in selecting an option for sending a file such as an image or a document. The option may be in any form. This is not limited in this embodiment of this application.

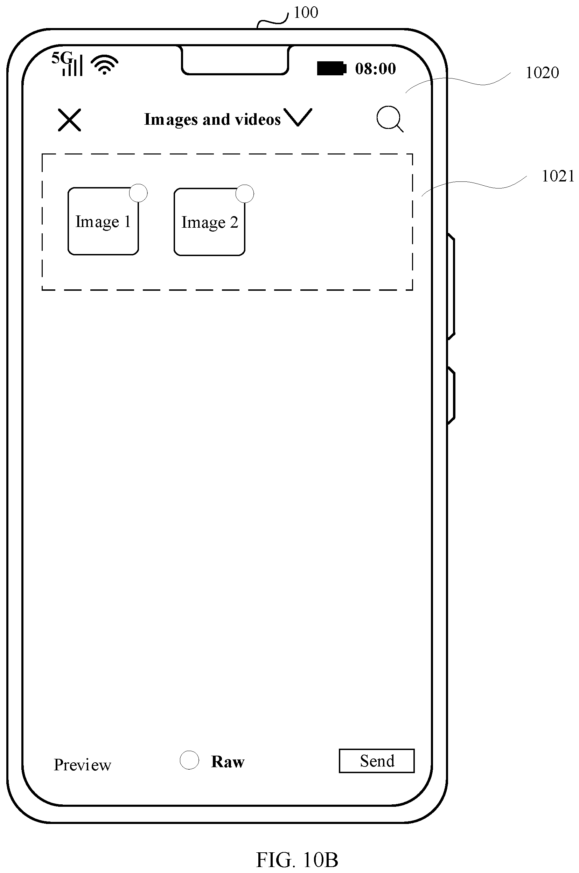

Sending an image is used as an example. Still with reference to FIG. 10A, if the user expects to send an image to Lily, the electronic device 100 may detect an operation performed by the user on an album option. In response to the operation, the electronic device 100 may display a user interface 1020 shown in FIG. 10B. The user interface 1020 may include a preview image list 1021. The preview image list 1021 may include one or more images (for example, an image 1 and an image 2).

In this embodiment of this application, the system may provide a file selection function for an application. When the system perceives that a file is in a selected state, an encrypted share option may be displayed on an interface. The option may be displayed at any position on the interface. This is not limited in this embodiment of this application.

For example, still with reference to FIG. 10B, the electronic device 100 may detect an operation of selecting one or more images (for example, an operation of tapping the image 1) by the user. In response to the operation, the electronic device 100 may display an encrypted share option 1022 shown in FIG. 10C as an example.

It is easy to understand that a function of supporting the user in selecting one or more images may be a function in an application, and a function of displaying the encrypted share option 1022 may be a function in the system.

In this embodiment of this application, after detecting an operation (for example, a tap operation) performed on the encrypted share option 1022 by the user, the electronic device 100 may start to perform a permission setting process. For the permission setting process, refer to related content (including related content of selecting a receiver identity and performing permission protection) in the foregoing scenario 1. Details are not described herein again.

In some examples, on the basis that a current communication application provides a user identity reading function, the electronic device 100 may obtain an identity of a receiver on a current interface, and may further obtain, based on the identity, a credential corresponding to the identity and perform, based on the credential, permission protection on a file selected by the user. For a specific process, refer to related content in the foregoing scenario 1. Details are not described herein again.

After permission setting of the file is completed, the electronic device 100 may support the user in sending the file to a receiver device. For example, still with reference to FIG. 10C, the electronic device 100 may detect an operation (for example, a tap operation) performed on a send option by the user. In response to the operation, the electronic device 100 may send, to the receiver device (for example, a device of Lily), the image 1 whose permission is set.

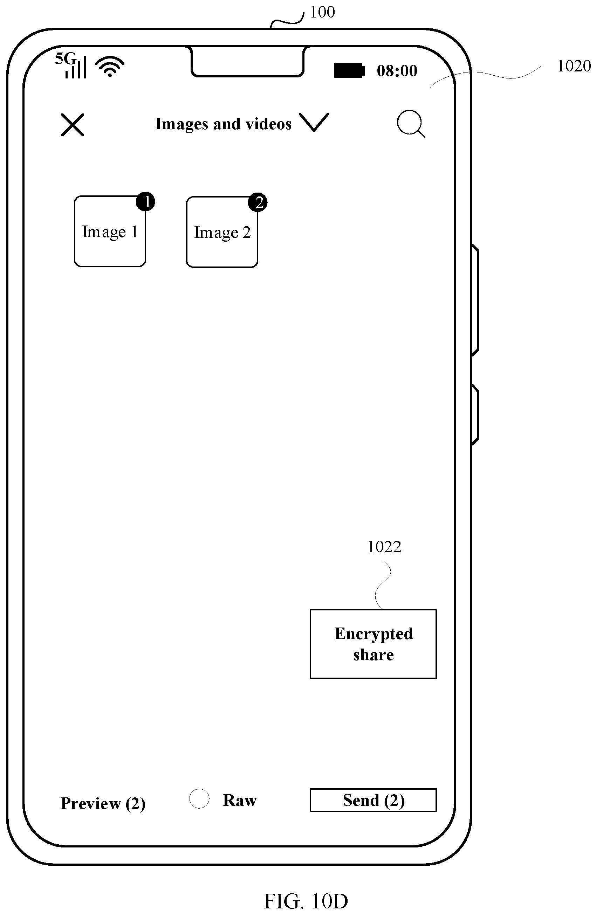

In some examples, the system may perceive the selected state of the file. When the file is in the selected state, after obtaining authorization of the user, the system may scan the file, to obtain information included in the file. When the file includes personal information (such as a portrait, an identity number, or a bank card number), the electronic device 100 displays an encrypted share option. For example, with reference to FIG. 10B, it is assumed that the image 1 does not include the personal information, and the image 2 includes the personal information. If the user selects the image 1 but does not select the image 2, the electronic device 100 may not display the encrypted share option. With reference to FIG. 10D, if the user selects the image 1 and then selects the image 2, the electronic device 100 may display the encrypted share option. Optionally, an encrypted share control may also be located at a same level as controls such as an album and a video call. When the user taps the encrypted share control, selection and encrypted sharing are triggered for the file. A path for selecting a file that needs to be encrypted and shared may be a dedicated path of the encrypted and shared file, or may be a selection path shared with a general file. After the user selects encrypted sharing, an encryption operation is completed in a user-unaware manner, and sharing is performed.

It can be learned from the foregoing scenario 2 that, according to the method provided in this embodiment of this application, after a file is selected in an application (a system application or a third-party application), the system triggers encrypted sharing of the file (for example, displays an encrypted share option). The electronic device can support a user in using a system function to configure who a file is to be sent to and permission (for example, "read-only" permission and "editable" permission) of a file receiver, and an upper-layer application does not need to perceive encryption of the file, thereby improving ecological friendliness and improving user experience. In this way, the following problem can be resolved: Data encryption and permission setting that are initiated in the upper-layer application need to be separately implemented by the application, and repeated implementation is required if another application is to perform permission management and control on a file.

**Scenario 3: Receive and open a shared file through a system.**

In this embodiment of this application, the electronic device 200 may receive, by using different receiving channels (for example, near-field sharing and communication application sharing), an encrypted file shared by the electronic device 100.

With reference to FIG. 11A, a user interface 1110 shown in FIG. 11A as an example may be a user interface used by a user to select a file/folder in a system. The user interface 1110 may include a file management list. The file management list may include one or more files (for example, a document 1, a document 2, and a document 3) and one or more folders. The user interface used by the user to select the file/folder in the system may be provided by an application that has a file presentation function, such as File manager and Gallery.

In some examples, the encrypted file may have an icon for identifying the encrypted file, and a presentation manner of the icon may include but is not limited to the following two manners:

### Manner 1

Icons of encrypted files in all formats (for example, formats such as doc and jpg) are a same encryption icon. For example, an icon of the document 1 shown in FIG. 11A is an icon of a lock.

### Manner 2

Exclusive icons in an original format are presented for encrypted files in different formats, and an encryption icon is displayed on the exclusive icon in a superimposed manner. For example, an icon of a lock is displayed in a superimposed manner on an icon of a doc file, that is, a document 1 shown in FIG. 11B.

In this embodiment of this application, an operation of selecting a file/folder by a user may include but is not limited to a touch and hold operation, a tap operation, and the like. There may be one or more selected files/folders.

For example, with reference to FIG. 11B, the user may select the encrypted file: the document 1 by performing a tap operation.

In this embodiment of this application, after the electronic device 200 detects that the user selects the file, a system of the electronic device 200 may perceive that the file is in the selected state. Further, the system may parse a type of the file, and determine whether the file is a controlled, encrypted, and shared file (which may also be referred to as an encrypted file or a controlled file).

For example, when the file has an extension of a specific file name, the system may parse, based on the extension, whether the file is a controlled, encrypted, and shared file.

For example, when the file does not have an extension of a specific file name, the system may parse file content and determine a "controlled, encrypted, and shared file attribute" feature of the file. Parsing the file content may include but is not limited to: parsing a permission configuration field from the file content and parsing a permission configuration field from file metadata.

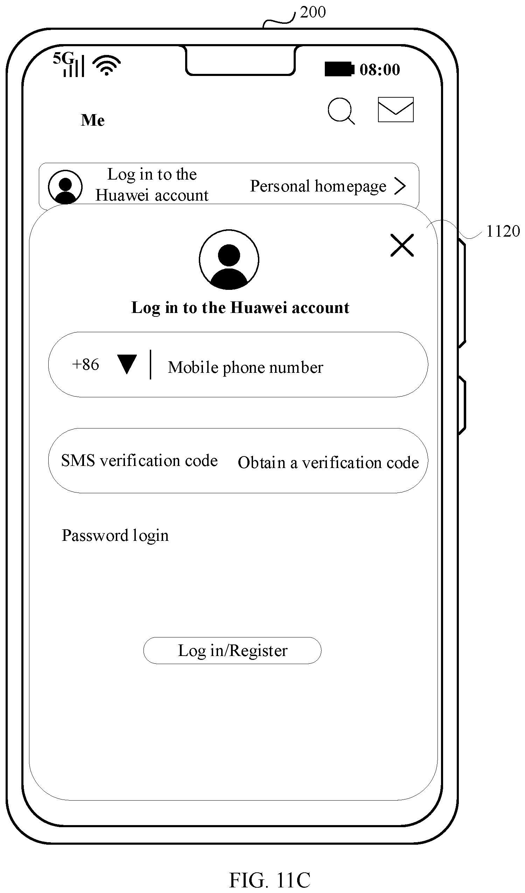

In this embodiment of this application, after the electronic device 200 detects that the user selects the file, a system of the electronic device 200 may determine a current account login status of the user. If the user does not log in to an account, the electronic device 200 may guide, in an interface display manner, the user to log in to the account. For example, with reference to FIG. 11C, the electronic device 200 may support the user in logging in to the account by manually inputting a mobile phone number and an SMS verification code in a window 1120. This is not limited thereto. Alternatively, the account may be logged in to in another manner (for example, a face verification manner or a fingerprint verification manner).

In this embodiment of this application, after detecting that the user logs in to the account, the electronic device 200 may obtain a decryption credential associated with the account. An obtaining method may include but is not limited to the following two manners:
Manner 1: Obtain the decryption credential from a server.

The server may store a mapping relationship table between an identity (associated with the login account) and a credential. The electronic device 200 may upload an identity of a user (that is, a user that has logged in to an account) of the electronic device 200 to the server. The server may determine, based on the mapping relationship table between an identity and a credential, a credential corresponding to the identity, and deliver the credential to the electronic device 200.

Manner 2: Obtain the decryption credential locally.

The electronic device 200 may synchronize a mapping relationship table between an identity and a credential in the server, locally store the mapping relationship table, and locally obtain a credential based on the mapping relationship table between an identity and a credential.

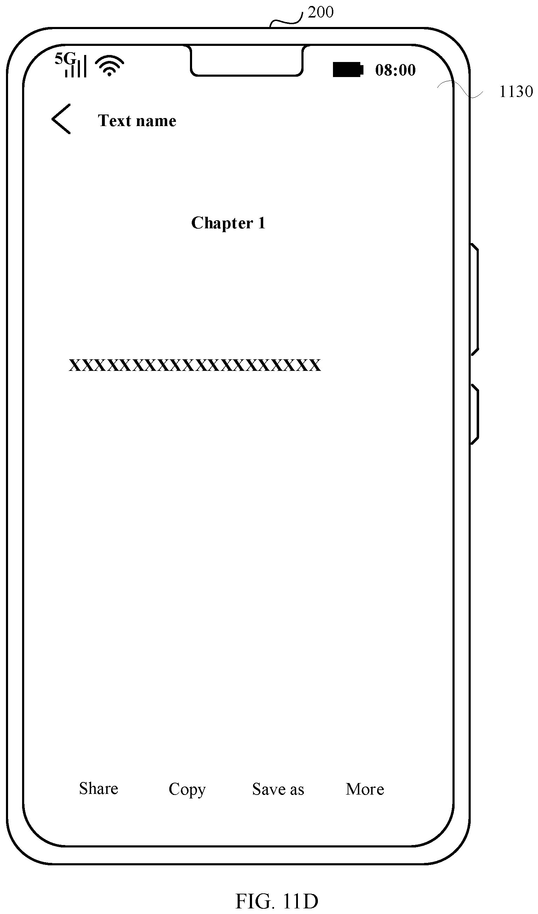

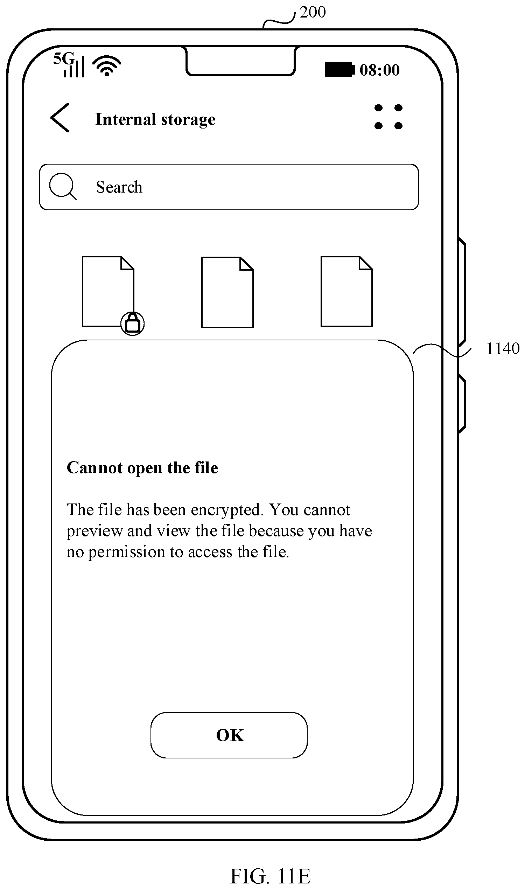

In this embodiment of this application, if a user that has logged in to an account is consistent with a specified receiver of a controlled, encrypted, and shared file, the electronic device 200 can open the file, for example, display a user interface 1130 shown in FIG. 11D after the file is opened; or if a user that has logged in to an account is inconsistent with a specified receiver of a controlled, encrypted, and shared file, the electronic device 200 cannot open the file. For example, the electronic device 200 displays a window 1140 shown in FIG. 11E, and the window 1140 may include related prompt information, to inform the user that the user has no permission to open the file.

In this embodiment of this application, for the user that has permission to open the controlled, encrypted, and shared file, the system of the electronic device 200 may determine a specific application to be used to open the file.

In some examples, the electronic device 200 may open the file by using a default application, and the user does not need to manually select a specific application to open the file. For example, after detecting that the user chooses to open the file, the electronic device 200 may directly open the file by using, for example, a default application shown in FIG. 11D, and display file content.

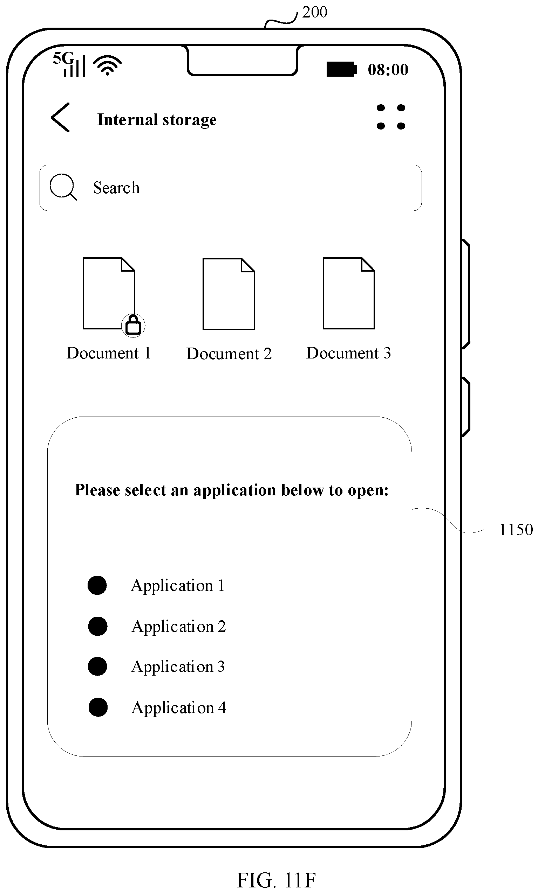

In some other examples, the electronic device 200 may provide a presentation panel of a list of applications installed in the system to support the user in autonomously selecting and using a specific application to open the file. For example, with reference to FIG. 11F, after detecting that the user chooses to open the file, the electronic device 200 may display a window 1150. The window 1150 may include an application list. The application list may include one or more applications (for example, an application 1, an application 2, an application 3, and an application 4). The user may manually select an application to trigger the electronic device 200 to launch the application and open the file in the application to display file content. The one or more applications may be a system application, or may be any third-party application installed by the user.

It is easy to understand that, if the application selected by the user does not have an opening capability for an original document type (for example, the user chooses to open an encrypted .doc file by using an image editing application), the electronic device 200 may display related prompt information to inform the user that the application cannot open the file (for example, display error information "cannot open the .doc file").

In this embodiment of this application, if the "read-only" permission is configured for the controlled, encrypted, and shared file, after the user opens the file, the user can only read the file, but cannot initiate another operation (for example, an operation such as print, save as, or screenshot) on the file. In a possible implementation, user equipment may provide system-level interception. In this manner, a capability and a management and control range of a third-party application may not be concerned, and data management and control may be enhanced. A system-level interception manner may include but is not limited to the following three types:
Manner 1: The system displays prompt information (or referred to as error information), and the system intercepts the foregoing operations (for example, an operation such as print, save as, or screenshot).

For example, when detecting that the user performs a copy operation on the file, the electronic device 200 may display a window 1160 shown in FIG. 11G. The window 1160 may include prompt information 1161. The prompt information 1161 may be used to inform the user that the user can only read the file, but cannot initiate a copy operation on the file.

For example, when detecting that the user performs a save-as operation on the file, the electronic device 200 may display a window 1170 shown in FIG. 11H. The window 1170 may include prompt information 1171. The prompt information 1171 may be used to inform the user that the user can only read the file, but cannot initiate a save-as operation on the file.

For example, when detecting that the user performs a screenshot operation on the file, the electronic device 200 may display a window 1180 shown in FIG. 11I. The window 1180 may include prompt information 1181. The prompt information 1181 may be used to inform the user that the user can only read the file, but cannot initiate a screenshot operation on the file.

Manner 2: The system does not display prompt information (or referred to as error information), and the system intercepts the foregoing operations (for example, an operation such as print, save as, or screenshot) in the background.

Manner 3: The system does not display prompt information (or referred to as error information), the system intercepts the foregoing operations (for example, an operation such as print, save as, or screenshot) in the background, the system provides an interception notification, and an application implements an interception notification prompt.

It is easy to understand that when the user opens another file without permission protection by using a same application, and performs the foregoing operations such as copy and print, the electronic device 200 may not perform an interception operation.

For example, for different management and control functions, functions in the following three different modes may be classified. For details, refer to content in Table 2 below.

**Table 2**

| **Function manageme nt and control type** | **Manageme nt and control manner** | **Operati on type** | **Specific operation function** | **Management and control specification** | **Managemen t and control interception point** | **Manageme nt and control method** |
|---|---|---|---|---|---|---|
| **Mode 1: A function point has a correspond ing system permission definition** | Dynamically configure permission. Dynamically configure permission of an application when the application is started in a twin mode. | Docume nt reading and writing | Save as, and convert to images for saving | 1. Permission on the document is read-only: Save forbidden | Media library service | Restrict save permission |
| | | | | 2. Permission on the document is full control: Save allowed | | |
| | | Operatio n on a file | Send files through a network | 1. Sending is forbidden in a sandbox window | Network service | Restrict network permission |
| | | Operatio n on a file | Send files through Bluetooth | 1. Sending is forbidden in a sandbox window | Bluetooth service | Restrict Bluetooth permission |
| **Mode 2: A function point has no correspond ing permission definition, and a common application uses this function** | Dynamically load a function that needs to be managed and controlled. For example, dynamically load a function that needs to be managed and controlled in a permission management service. | Operatio n on a file | Print | 1. An application that currently triggers printing is a sandbox application of a read-only sandbox window: Print forbidden | Print service | The print service queries whether printing can be performed |
| | | | | 2. Other cases: Print allowed | | |
| | | Operatio n on a file | Copy | 1. An application that currently triggers a clipboard is an application of a read-only sandbox window: Copy forbidden | Clipboard service | The clipboard service queries whether clipping and pasting can be performed |
| | | | | 2. Other cases: Copy allowed | | |
| **Mode 3: A function point has no correspond ing permission definition, but a general mechanism can restrict use of a common application** | When an application is started in twin mode, a general mechanism is used to restrict use of the twin application. | Operatio n on a file | Screenshot taking/Screen recoding | 1. Any read-only sandbox window exists in a foreground visible window: Screenshot taking/Screen recording forbidden | Window management service | When an application is started, the application window is set to prohibit screenshot taking and screen recording |
| | | | | 2. Other cases: Screenshot taking/Screen recording allowed | | |

The following describes control procedures for function execution in three different modes.

### 1. Network and Bluetooth control procedure

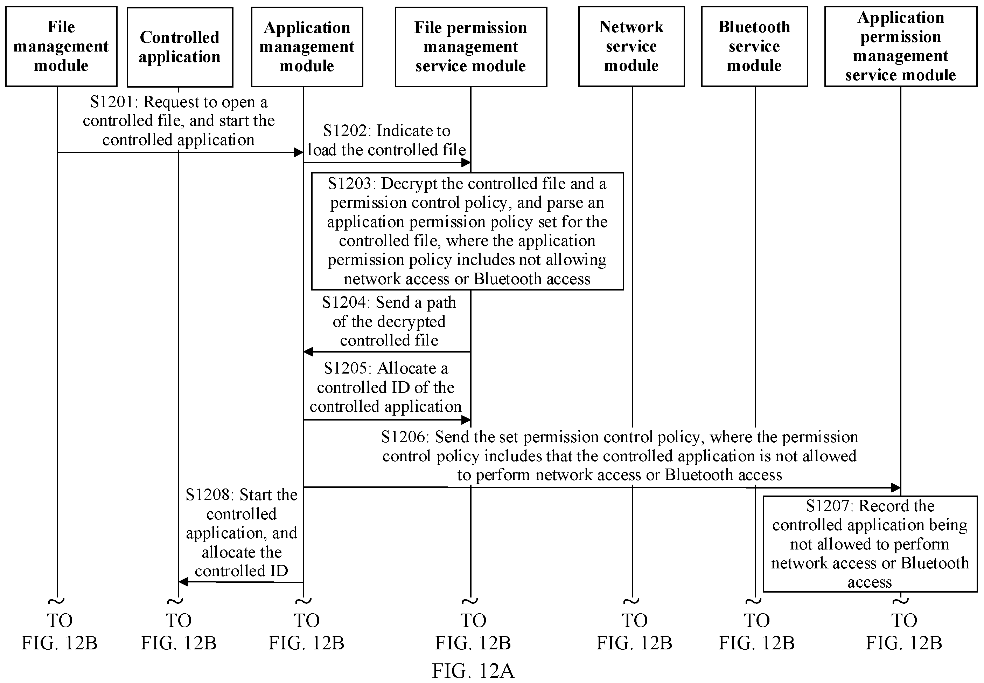

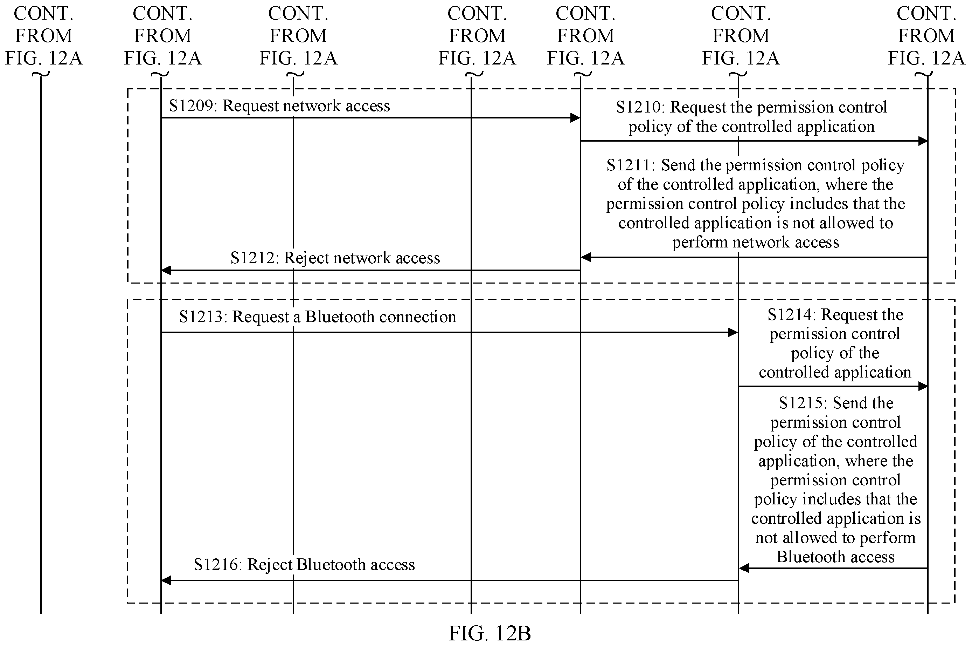

**FIG. 12A** **and** **FIG. 12B** **show an example of a specific procedure of controlling functions such as network and Bluetooth according to an embodiment of this application.**

As shown in FIG. 12A and FIG. 12B, the procedure may be applied to the electronic device 200. The electronic device 200 may include a file management module, a controlled application (that is, an application for opening a controlled file), an application management module, a file permission management service module, a network service module, a Bluetooth service module, and an application permission management service module. The following describes in detail specific steps.

**S1201:** The file management module requests the application management module to open a controlled file and start a controlled application.

**S1202:** The application management module indicates the file permission management service module to load the controlled file.

**S1203:** The file permission management service module decrypts the controlled file and a permission control policy, and parses an application permission policy set for the controlled file. The application permission policy includes not allowing network access or Bluetooth access.

**S1204:** The file permission management service module sends a path of the decrypted controlled file to the application management module.

**S1205:** The application management module allocates a controlled ID of the controlled application to the file permission management service module.

In some examples, the controlled ID may be an application identifier 11.

**S1206:** The application management module sends the set permission control policy to the application permission management service module, where the permission control policy includes that the controlled application is not allowed to perform network access or Bluetooth access.

It is easy to understand that, after receiving the path that is of the decrypted controlled file and that is sent by the file permission management service module, the application management module may obtain the permission control policy of the controlled file on the path.

**S1207:** The application permission management service module records the controlled application being not allowed to perform network access or Bluetooth access.

**S1208:** The application management module starts the controlled application, and allocates the controlled ID.

In some examples, the application management module may start the controlled application in an independent process manner.

**S1209:** The controlled application requests network access from the network service module.

**S1210:** The network service module requests the permission control policy of the controlled application from the application permission management service module.

**S1211:** The application permission management service module sends the permission control policy of the controlled application to the network service module, where the permission control policy includes that the controlled application is not allowed to perform network access.

**S1212:** The network service module rejects access of the controlled application to the network.

Specifically, after receiving the permission control policy that is of the controlled application and that is sent by the application permission management service module, the network service module may reject access of the controlled application to the network when determining, based on the permission control policy, that the controlled application is not allowed to perform network access.

In some examples, step S1209 to step S1212 are optional.

**S1213:** The controlled application requests a Bluetooth connection from the Bluetooth service module.

**S1214:** The Bluetooth service module requests the permission control policy of the controlled application from the application permission management service module.

**S1215:** The application permission management service module sends the permission control policy of the controlled application to the Bluetooth service module, where the permission control policy includes that the controlled application is not allowed to perform Bluetooth access.

**S1216:** The Bluetooth service module rejects Bluetooth access of the controlled application.

Specifically, after receiving the permission control policy that is of the controlled application and that is sent by the application permission management service module, the Bluetooth service module may reject Bluetooth access of the controlled application when determining, based on the permission control policy, that the controlled application is not allowed to perform Bluetooth access.

In some examples, step S1213 to step S1216 are optional.

It should be noted that a time sequence of performing step S1209 to step S1212 and that of performing step S1213 to step S1216 are not limited in this embodiment of this application. For example, step S1209 to step S1212 may be performed before step S1213 to step S1216. For another example, step S1209 to step S1212 may be performed after step S1213 to step S1216.

It is easy to understand that a procedure of saving and controlling the controlled file is similar to the foregoing network and Bluetooth control procedure. There may be a limitation that an application is not allowed to access file storage. For a specific process, refer to related content of the foregoing network and Bluetooth control procedure. Details are not described herein again.

### 2. Print and copy control procedure

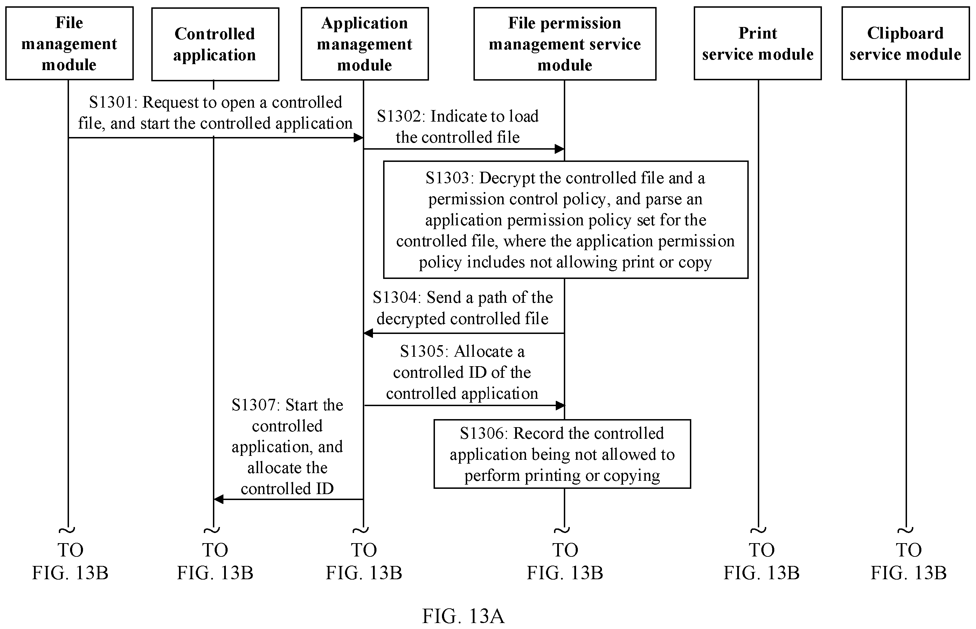

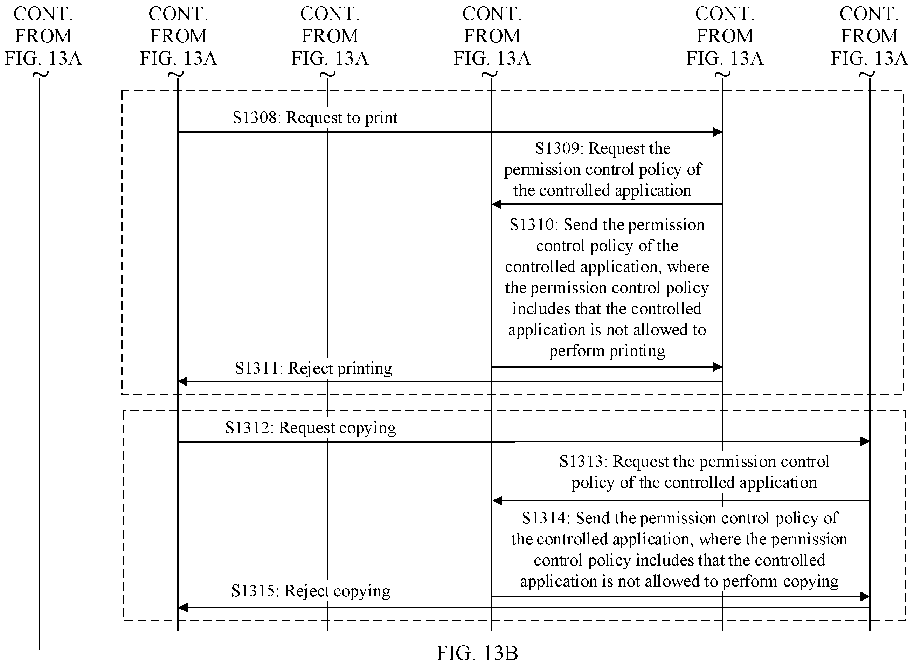

**FIG. 13A** **and** **FIG. 13B** **show an example of a specific procedure of controlling functions such as print and copy according to an embodiment of this application.**

As shown in FIG. 13A and FIG. 13B, the procedure may be applied to the electronic device 200. The electronic device 200 may include a file management module, a controlled application (that is, an application for opening a controlled file), an application management module, a file permission management service module, a print service module, and a clipboard service module. The following describes in detail specific steps.

**S1301:** The file management module requests the application management module to open a controlled file and start a controlled application.

**S1302:** The application management module indicates the file permission management service module to load the controlled file.

**S1303:** The file permission management service module decrypts the controlled file and a permission control policy, and parses an application permission policy set for the controlled file. The application permission policy includes not allowing print or copy.

**S1304:** The file permission management service module sends a path of the decrypted controlled file to the application management module.

**S1305:** The application management module allocates a controlled ID of the controlled application to the file permission management service module.

In some examples, the controlled ID may be an application identifier 11.

**S1306:** The file permission management service module records the controlled application being not allowed to perform printing or copying.

**S1307:** The application management module starts the controlled application, and allocates the controlled ID.

In some examples, the application management module may start the controlled application in an independent process manner.

**S1308:** The controlled application requests printing from the print service module.

**S1309:** The print service module requests the permission control policy of the controlled application from the file permission management service module.

**S1310:** The file permission management service module sends the permission control policy of the controlled application to the print service module, where the permission control policy includes that the controlled application is not allowed to perform printing.

**S1311:** The print service module rejects printing by the controlled application.

Specifically, after receiving the permission control policy that is of the controlled application and that is sent by the file permission management service module, the print service module may reject printing of the controlled file by the controlled application when determining, based on the permission control policy, that the controlled application is not allowed to perform a print operation.

In some examples, step S1308 to step S1311 are optional.

**S1312:** The controlled application requests copying from the clipboard service module.

**S1313:** The clipboard service module requests the permission control policy of the controlled application from the file permission management service module.

**S1314:** The file permission management service module sends the permission control policy of the controlled application to the clipboard service module, where the permission control policy includes that the controlled application is not allowed to perform copying.

**S1315:** The clipboard service module rejects copying by the controlled application.

Specifically, after receiving the permission control policy that is of the controlled application and that is sent by the file permission management service module, the clipboard service module may reject copying of the controlled file by the controlled application when determining, based on the permission control policy, that the controlled application is not allowed to perform a copy operation.

In some examples, step S1312 to step S1315 are optional.

It should be noted that a time sequence of performing step S1308 to step S1311 and that of performing step S1312 to step S1315 are not limited in this embodiment of this application. For example, step S1308 to step S1311 may be performed before step S1312 to step S1315. For another example, step S1308 to step S1311 may be performed after step S1312 to step S1315.

### 3. Screenshot control procedure

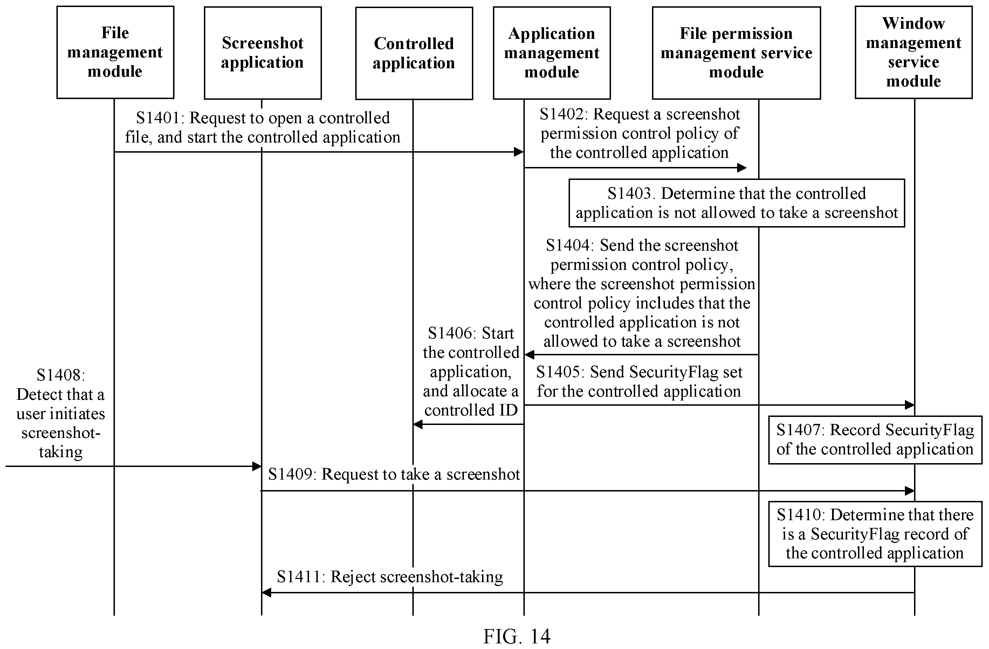

**FIG. 14** **shows an example of a specific procedure of controlling functions such as screenshot according to an embodiment of this application.**

As shown in FIG. 14, the procedure may be applied to the electronic device 200. The electronic device 200 may include a file management module, a screenshot application, a controlled application (that is, an application for opening a controlled file), an application management module, a file permission management service module, and a window management service module. The following describes in detail specific steps.

**S1401:** The file management module requests the application management module to open the controlled file and start the controlled application.

**S1402:** The application management module requests, from the file permission management service module, a screenshot permission control policy associated with the controlled application.

It is easy to understand that before performing step S1402, the application management module may indicate the file permission management service module to load the controlled file and obtain the permission control policy of the controlled file.

**S1403:** The file permission management service module determines that the controlled application is not allowed to take a screenshot.

It is easy to understand that the file permission management service module may determine, based on the obtained permission control policy of the controlled file, whether the controlled application can be allowed to perform a screenshot operation on the controlled file.

**S1404:** The file permission management service module sends the screenshot permission control policy to the application management module, where the screenshot permission control policy includes that the controlled application is not allowed to take a screenshot.

**S1405:** The application management module sends SecurityFlag set for the controlled application to the window management service module.

It is easy to understand that, when the controlled application is not allowed to perform a screenshot operation on the controlled file, the application management module may set SecurityFlag for the controlled application.

**S1406:** The application management module starts the controlled application, and allocates a controlled ID.

**S1407:** The window management service module records SecurityFlag of the controlled application.

**S1408:** The screenshot application detects that a user initiates screenshot-taking.

**S1409:** The screenshot application requests screenshot-taking from the window management service module.

**S1410:** The window management service module determines that there is a SecurityFlag record of the controlled application.

**S1411:** The window management service module rejects screenshot-taking by the screenshot application.

Specifically, when the window management service module determines that there is the SecurityFlag record of the controlled application, the window management service module may reject the screenshot operation performed by the screenshot application on content of the controlled file presented in the controlled application.

It is easy to understand that a screen recording control procedure of the controlled file is similar to the foregoing network and Bluetooth control procedure. For a specific process, refer to related content of the foregoing screenshot control procedure. Details are not described herein again.

**Scenario 4: Receive and open a shared file by using a communication application.**

The electronic device 200 may support a user in receiving, by using a communication application (for example, a chat application or an email application), an encrypted file shared by the electronic device 100.

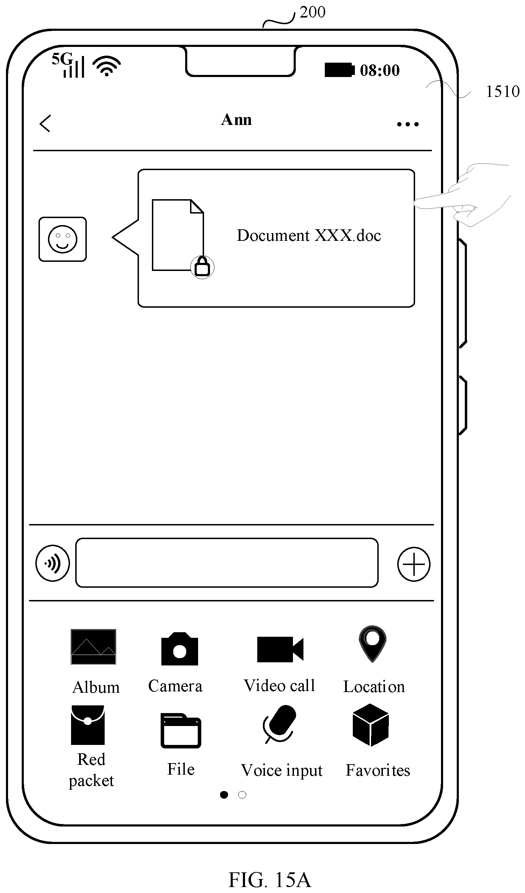

For example, with reference to FIG. 15A, a user interface 1510 shown in FIG. 15A may be a chat interface provided by a chat application. The chat interface may be a chat interface between a user of the electronic device 200 and a user Ann. It can be learned that a document XXX.doc is an encrypted file, and a sender of the file is Ann. The user may perform a tap operation on the encrypted file to trigger the electronic device 200 to open the file.

In this embodiment of this application, after detecting the operation of tapping the encrypted file by the user, the electronic device 200 may determine whether the user logs in to a specified account in a receiver range of the file. If the user does not log in to the specified account in the receiver range of the file, the electronic device 200 may prompt the user to log in to the account. For example, the electronic device 200 may display the window shown in FIG. 11C to prompt the user to log in to the account. If the user logs in to the specified account in the receiver range of the file, the electronic device 200 may determine a specific application to be used to open the file. Similar to the foregoing scenario 3, the electronic device 200 may use a default application to open the file, or may provide a presentation panel of a list of applications installed in a system to support the user in autonomously selecting and using a specific application to open the file. In some examples, if the communication application has a file browsing function, the electronic device 200 may also directly open the file in the application.

It should be noted that the specified account in the receiver range of the encrypted file may be different from or the same as an account system used in the communication application. In some examples, if an account limited in the encrypted file is a specified account (for example, a Huawei account) in an account system 2, when the user uses an account in an account system 1 (for example, a chat account used by a chat application), and the user expects to open the file, the electronic device 200 may prompt the user to log in to the account in the account system 2. In some other examples, if an account (for example, a chat account used by a chat application) in an account system 1 is associated with a specified account (for example, a Huawei account) in an account system 2, when the user expects to open the file, the electronic device 200 may directly obtain information associated with the account which the user logs in to, to further obtain the specified account in the account system 2. In this way, the electronic device 200 does not need to prompt the user to log in to the account in the account system 2.

In some examples, still with reference to FIG. 15A, after detecting the operation of tapping the encrypted file by the user, the electronic device 200 may automatically save the encrypted file locally. For a manner in which the user opens the file subsequently, refer to the description about opening of the file for the first time in the foregoing related content. Details are not described herein again. Alternatively, after the file is opened for the first time, the file is opened subsequently according to a related service rule. For example, the file may be directly opened again within a preset time, and re-authentication is required when the preset time expires.

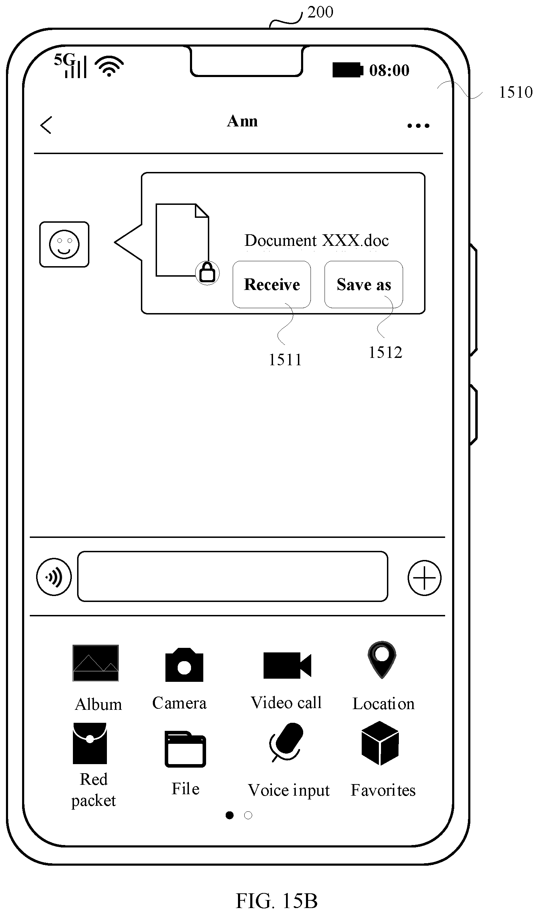

In some other examples, with reference to FIG. 15B, the electronic device 200 may display a receive option 1511 and a save-as option 1512 in a user interface 1510. The receive option 1511 may be used to receive a file and save the file in a local default path. The save-as option 1512 may be used to receive a file and save the file in a local user-specified path. For a manner of opening the file by the user subsequently, refer to the foregoing related content. Details are not described herein again.

Similar to the foregoing scenario 3, if "read-only" permission is configured for the foregoing encrypted file, after the user opens the file, the user can only read the file, but cannot initiate another operation (for example, an operation such as print, save as, or screenshot) on the file.

In this embodiment of this application, a manner in which the electronic device 100 (that is, a sender device) encrypts the file and the electronic device 200 (that is, a receiver device) decrypts the file may include but is not limited to four manners in Table 3 below.

**Table 3**

| | **The electronic device 100 (that is, the sender device) encrypts the file** | **The electronic device 200 (that is, the receiver device) decrypts the file** |
|---|---|---|
| **Manner 1** | The "file permission management service module" of the electronic device 100 may directly or indirectly encrypt the file based on an identity credential that is of a receiver and that is obtained from a server, to generate a file ciphertext protected based on a credential of the server. | After the file ciphertext is received, the ciphertext may be uploaded to the server, and the server may be requested to decrypt the ciphertext. |
| | | After the decryption, the server may directly deliver a file content plaintext and a file permission plaintext of the encrypted file to the electronic device 200; or the server may re-encrypt the foregoing plaintexts based on the identity credential of the receiver and deliver an encryption result to the electronic device 200. |
| **Manner 2** | The "file permission management service module" of the electronic device 100 uploads the file to the server, and the server indexes the identity credential of the receiver, to encrypt the file on the electronic device 100 in a same encryption manner. | Decryption method 1: Obtain a credential corresponding to an identity of the receiver and decrypt the file. Decryption method 2: Same as the decryption method in the foregoing manner 1. |
| **Manner 3** | The file is not encrypted. A permission control policy is written only into the file. An identity of a receiver is specified or not specified. | The file is a plaintext and does not need to be further decrypted. The file permission management service module parses the permission control policy in the file. |
| | | When the identity of the receiver is not specified, the receiver can forward the file but cannot edit the file. |
| **Manner 4** | The file is not encrypted. A mapping between a file ID and a permission definition is recorded on a server. | Based on the file ID, a permission control policy corresponding to the file is queried in the server, and the permission control policy is parsed on a side of the electronic device 200. |

In this embodiment of this application, devices of the receiver that can open a file shared by a sender may also be limited. A specific policy may include but is not limited to the following three types.

### Policy 1:

A device can open a file provided that the specified account in the receiver range is logged in to on the device. For example, after receiving the file on the electronic device 200, the receiver may forward the file to another device of the receiver, and open the file on the another device.

### Policy 2:

Only one device of the receiver is allowed to open the file (the specified account in the receiver range is logged in to on the device). Alternatively, when a quantity of devices of the receiver is less than a specific preset threshold, the receiver is allowed to open the file on a plurality of devices (the specified account in the same receiver range is logged in to on the plurality of devices).

### Policy 3:

A device can open the file only when the specified account in the receiver range is logged in to on the device and the device meets a corresponding security condition (for example, it is set that a screen is locked, a device has a trusted execution environment, and a device is not rooted).

In this embodiment of this application, when the sender of the file grants "editable" permission of the file to the receiver, whether the receiver can perform a forward operation on the file may also be limited. A specific policy may include but is not limited to the following four types:

### Policy 1:

After receiving and saving the file locally, the receiver device may share the file with one or more users in the manner in the scenario 1 or the scenario 2, or directly forward the file.

### Policy 2:

The receiver device may only view or edit the file, and cannot share the file with one or more users in the manner in the scenario 1 or the scenario 2.

### Policy 3:

The receiver device may view or edit the file, and may also forward the file. However, the receiver after the forwarding has only the "read-only" permission of the file. If the receiver expects to obtain the "editable" permission, the receiver needs to contact the sender to perform related setting.

### Policy 4:

The receiver device may view or edit the file, and may also forward the file. However, before the forwarding, the sender needs to be notified, and the sender re-initiates authorization. After the authorization, the receiver device may forward the file.

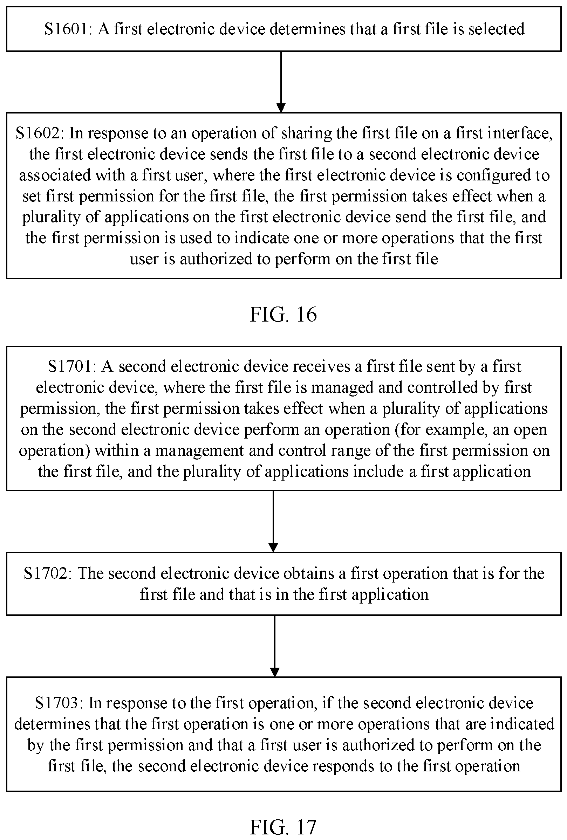

**FIG. 16** **shows an example of a specific procedure of a data sharing method according to an embodiment of this application.**

As shown in FIG. 16, the method may be applied to a first electronic device. The following describes in detail specific steps of the method.

**S1601:** The first electronic device determines that a first file is selected.

**S1602:** In response to an operation of sharing the first file on a first interface, the first electronic device sends the first file to a second electronic device associated with a first user. The first electronic device is configured to set first permission for the first file. The first permission takes effect when a plurality of applications on the first electronic device send the first file. The first permission indicates one or more operations that the first user is authorized to perform on the first file.

The first electronic device is a sender device (for example, the electronic device 100). The second electronic device is a receiver device (for example, the electronic device 200). The first file is a to-be-shared file and may include but is not limited to an image, a document, and audio and video.

In a possible implementation, the method further includes: Before the first electronic device sends the first file to the second electronic device associated with the first user, the first electronic device displays at least one of a device list, an application list, and a user list on an interface. The interface is the first interface or a second interface. The first electronic device sending the first file to the second electronic device associated with the first user specifically includes that: in response to an operation of selecting the second electronic device from the device list, the first electronic device sends the first file to the second electronic device associated with the first user; or in response to an operation of selecting a first application from the application list, the first electronic device sends, by using the first application, the first file to the second electronic device associated with the first user; or in response to an operation of selecting the first user from the user list, the first electronic device sends the first file to the second electronic device associated with the first user.

In a possible implementation, the first electronic device sending the first file to the second electronic device associated with the first user specifically includes that: in response to an operation that is of sharing the first file and that is triggered on an interface, the first electronic device sends the first file to the second electronic device associated with the first user. The interface is an interface on which a conversation with the first user is performed (for example, the interface shown in FIG. 10A).

In a possible implementation, the first permission is set for the first file before the operation of sharing the first file; or the first permission is set for the first file after the operation of sharing the first file, and the first file is sent to the second electronic device associated with the first user.

In a possible implementation, the method further includes: In response to the operation of sharing the first file on the first interface, the first electronic device sends the first file to a third electronic device associated with a second user. The first electronic device is configured to set second permission for the first file. The second permission takes effect when a plurality of applications on the first electronic device send the first file. The second permission indicates one or more operations that the second user is authorized to perform on the first file.

In a possible implementation, the method further includes: The first electronic device determines that a second file is selected. In response to an operation of sharing the second file on the first interface, the first electronic device sends the second file to the second electronic device associated with the first user. The first electronic device is configured to set third permission for the second file. The third permission takes effect when a plurality of applications on the first electronic device send the second file. The third permission indicates one or more operations that the first user is authorized to perform on the second file.

In a possible implementation, the first user belongs to a first group. The first group further includes a third user. The method further includes: In response to the operation of sharing the first file on the first interface, the first electronic device sends the first file to a fourth electronic device associated with the third user, where the first permission further indicates one or more operations that the third user is authorized to perform on the first file. Alternatively, in response to the operation of sharing the first file on the first interface, the first electronic device sends the first file to a fourth electronic device associated with the third user. The first electronic device is configured to set fourth permission for the first file. The fourth permission takes effect when a plurality of applications on the first electronic device send the first file. The fourth permission indicates one or more operations that the third user is authorized to perform on the first file.

In a possible implementation, before the first electronic device sends the first file to the second electronic device associated with the first user, the method further includes: The first electronic device logs in to a first account, where the first account belongs to an account of a fourth user.

In a possible implementation, before the first electronic device sends the first file to the second electronic device associated with the first user, the method further includes: The first electronic device obtains a credential corresponding to the first user. The first electronic device encrypts the first file based on the credential.

In a possible implementation, the credential is obtained by the first electronic device from a server, or the credential is locally obtained by the first electronic device, or the credential is obtained by the first electronic device from the second electronic device.

In a possible implementation, that the first electronic device is configured to set the first permission for the first file specifically includes that the first electronic device is configured to write field information of the first permission into the first file; or the first electronic device is configured to send a first message to the server, where the first message includes field information of the first permission and identification information of the first file, and the first message indicates the server to store an association relationship between the field information of the first permission and the identification information of the first file.

In a possible implementation, the first permission includes read-only permission, editable permission, or forward permission, and the editable permission includes one or more of save-as permission, screenshot permission, screen recording permission, print permission, and copy permission.

In this embodiment of this application, the forward permission may fall within a defined range of the first permission, or may fall out of a defined range of the first permission (that is, the forward permission and the first permission may be parallel).

In a possible implementation, the first file includes sensitive information (for example, a portrait, an identity number, or a bank card number).

**FIG. 17** **shows an example of a specific procedure of another data sharing method according to an embodiment of this application.**

As shown in FIG. 17, the method may be applied to a second electronic device. The following describes in detail specific steps of the method.

**S1701:** The second electronic device receives a first file sent by a first electronic device. The first file is managed and controlled by first permission. The first permission takes effect when a plurality of applications on the second electronic device perform an operation (for example, an open operation) within a management and control range of the first permission on the first file. The plurality of applications include a first application.

**S1702:** The second electronic device obtains a first operation that is for the first file and that is in the first application.

**S1703:** In response to the first operation, if the second electronic device determines that the first operation is one or more operations that are indicated by the first permission and that the first user is authorized to perform on the first file, the second electronic device responds to the first operation.

The second electronic device is a receiver device (for example, the electronic device 200). The first electronic device is a sender device (for example, the electronic device 100). The first file is a to-be-shared file and may include but is not limited to an image, a document, and audio and video. The first operation may include but is not limited to view, save as, screenshot, screen recording, print, copy, and forward.

In a possible implementation, before the second electronic device determines that the first operation is one or more operations that are indicated by the first permission and that the first user is authorized to perform on the first file, the method further includes: The second electronic device determines that a user performing the first operation is the authenticated first user that has operation permission on the first file.

In a possible implementation, that the second electronic device determines that the user performing the first operation is the authenticated first user that has operation permission on the first file specifically includes that the second electronic device determines that a login account of the second electronic device is an account of the first user; or the second electronic device determines that a biometric feature of the user performing the first operation is consistent with a biometric feature of the first user; or the second electronic device receives a first message sent by a third electronic device, where the first message indicates that the user performing the first operation is the authenticated first user that has operation permission on the first file, and the third electronic device is associated with the second electronic device.

In a possible implementation, the method further includes: When the second electronic device determines that the first operation does not belong to one or more operations that are indicated by the first permission and that the first user is authorized to perform on the first file, the second electronic device displays first prompt information, where the first prompt information is used to inform the user that the second electronic device refuses to respond to the first operation.

In a possible implementation, the method further includes: In response to an operation of sharing the first file, the second electronic device sends the first file to the third electronic device associated with the first user.

In a possible implementation, the method further includes: In response to an operation of sharing the first file, the second electronic device sends the first file to a fourth electronic device associated with a second user.

In a possible implementation, when the first file is forwarded by the second electronic device, third permission is set for the first file, and an authorization range of the third permission does not exceed an authorization range of the first permission.

In a possible implementation, the method further includes: The second electronic device sends a second message to the first electronic device. The second message indicates a second operation that the first electronic device authorizes the first user to perform on the first file. The second operation does not belong to one or more operations that are indicated by the first permission and that the first user is authorized to perform on the first file.

In a possible implementation, the method further includes: The second electronic device sends a third message to the first electronic device. The third message indicates a forward operation that the first electronic device authorizes the first user to perform on the first file.

In a possible implementation, the first file is an encrypted file. Before the second electronic device responds to the first operation, the method further includes: The second electronic device obtains a credential corresponding to the first user. The second electronic device decrypts the first file based on the credential.

In a possible implementation, the second electronic device displays a first identifier, and the first identifier indicates that the first file is an encrypted file.

In a possible implementation, the first permission is obtained by the second electronic device from the first file; or the first permission is obtained by the second electronic device from a server.

In a possible implementation, the first permission includes read-only permission, editable permission, or forward permission, and the editable permission includes one or more of save-as permission, screenshot permission, screen recording permission, print permission, and copy permission.

The following describes a diagram of a structure of the electronic device 100 according to an embodiment of this application.

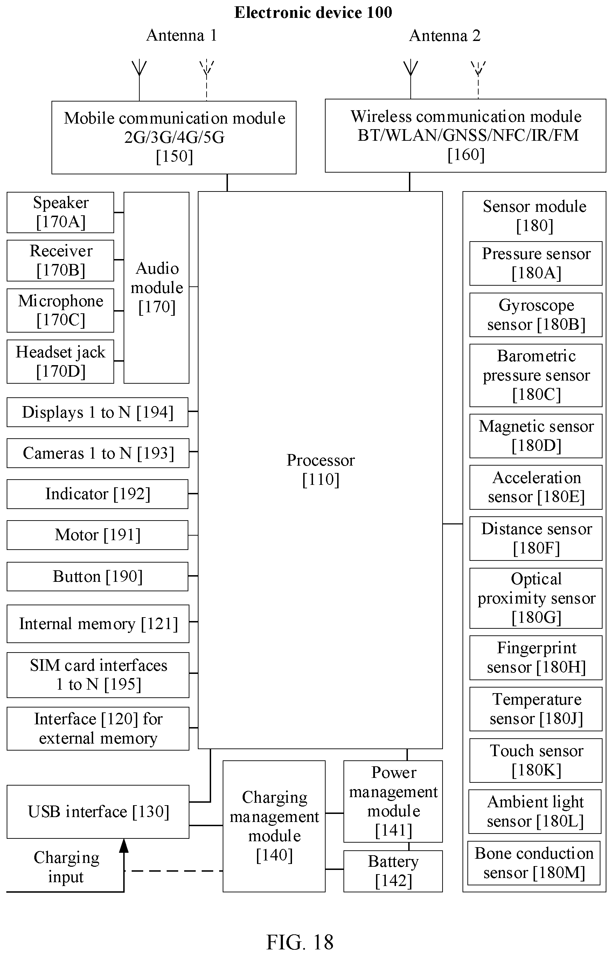

**FIG. 18** **shows an example of a structure of an electronic device 100 according to an embodiment of this application.**

As shown in FIG. 18, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application constitutes no specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. Alternatively, the interface may be configured to connect to another terminal device, for example, an AR device.

It may be understood that an interface connection relationship between modules that is illustrated in embodiments of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near-field communication (near-field communication, NFC) technology, an infrared (infrared, IR) technology, and the like. The wireless communication module 160 may be one or more components integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may specifically include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

**In this embodiment of this application, the electronic device 100 may communicate with another electronic device (for example, the electronic device 200) in a communication manner such as Bluetooth communication or Wi-Fi communication. For example, the electronic device 100 may send, to the electronic device 200 in a communication manner such as Bluetooth communication or Wi-Fi communication, a file that needs to be encrypted and shared.**

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 can play back or record videos in a plurality of coding formats, for example, moving picture experts group (moving picture experts group, MPEG)-1, MPEG-2, MPEG-3, and MPEG-4.

The interface 120 for external memory may be configured to connect to an external storage card, for example, a micro SD card, to extend a storage capability of the electronic device 100. The external memory card communicates with the processor 110 through the interface 120 for external memory, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an application icon of Messages, an instruction for checking a message is performed. When a touch operation whose touch operation intensity is greater than or equal to the first pressure threshold is performed on the application icon of Messages, an instruction for creating a new message is performed.

The fingerprint sensor 180H is configured to collect a fingerprint. The electronic device 100 may use a feature of the collected fingerprint to implement fingerprint-based unlocking, application lock access, fingerprint-based shooting, fingerprint-based call answering, and the like.

The touch sensor 180K is also referred to as a "touch panel". The touch sensor 180K may be disposed in the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. Touch vibration feedback effect may be further customized.

The indicator 192 may be an indicator light, and may be configured to indicate a charging status and a power change, or may be configured to indicate a message, a missed call, a notification, and the like.

It should be understood that the electronic device 100 shown in FIG. 18 is merely an example, and the electronic device 100 may have more or fewer components than those shown in FIG. 18, or may combine two or more components, or may have different component configurations. Various components shown in FIG. 18 may be implemented in hardware, software, or a combination of hardware and software that includes one or more signal processors and/or application-specific integrated circuits.

A structure of the electronic device 200 may be the same as or similar to the structure of the electronic device 100. For content related to the structure of the electronic device 200, refer to related descriptions of the structure of the electronic device 100 shown in FIG. 18. Details are not described herein again.

An embodiment of this application further provides a chip system, including a processor. The processor is coupled to a memory. The memory is configured to store a program or instructions. When the program or the instructions are executed by the processor, the chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system-on-a-chip (system-on-a-chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments can be implemented by using a hardware integrated logic circuit of in a processor, or by using instructions in a form of software. The steps of the method disclosed with reference to embodiments of this application may be directly performed and completed by a hardware processor, or may be performed and completed through a combination of hardware in the processor and a software module.

All or a part of the foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may understand that all or a part of the processes of the methods in embodiments may be implemented by a computer program instructing relevant hardware. The program may be stored in a computer-readable storage medium. When the program runs, the processes of the methods in embodiments may be performed. The foregoing storage medium includes any medium that can store program code, such as a ROM, a random access memory RAM, a magnetic disk, or an optical disc.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A data sharing method, applied to a first electronic device, wherein the method comprises:
determining, by the first electronic device, that a first file is selected; and
in response to an operation of sharing the first file on a first interface, sending, by the first electronic device, the first file to a second electronic device associated with a first user, wherein
the first electronic device is configured to set first permission for the first file, the first permission takes effect when a plurality of applications on the first electronic device send the first file, and the first permission indicates one or more operations that the first user is authorized to perform on the first file.

2. The method according to claim 1, wherein the method further comprises:
before the first electronic device sends the first file to the second electronic device associated with the first user, displaying, by the first electronic device, at least one of a device list, an application list, and a user list on an interface, wherein the interface is the first interface or a second interface; and
sending, by the first electronic device, the first file to the second electronic device associated with the first user specifically comprises:
in response to an operation of selecting the second electronic device from the device list, sending, by the first electronic device, the first file to the second electronic device associated with the first user; or
in response to an operation of selecting a first application from the application list, sending, by the first electronic device by using the first application, the first file to the second electronic device associated with the first user; or
in response to an operation of selecting the first user from the user list, sending, by the first electronic device, the first file to the second electronic device associated with the first user.

3. The method according to claim 1, wherein sending, by the first electronic device, the first file to the second electronic device associated with the first user specifically comprises:
in response to an operation that is of sharing the first file and that is triggered on an interface, sending, by the first electronic device, the first file to the second electronic device associated with the first user, wherein the interface is an interface on which a conversation with the first user is performed.

4. The method according to any one of claims 1 to 3, wherein
the first permission is set for the first file before the operation of sharing the first file; or
the first permission is set for the first file after the operation of sharing the first file, and the first file is sent to the second electronic device associated with the first user.

5. The method according to any one of claims 1 to 4, wherein the method further comprises:
in response to the operation of sharing the first file on the first interface, sending, by the first electronic device, the first file to a third electronic device associated with a second user, wherein
the first electronic device is configured to set second permission for the first file, the second permission takes effect when a plurality of applications on the first electronic device send the first file, and the second permission indicates one or more operations that the second user is authorized to perform on the first file.

6. The method according to any one of claims 1 to 5, wherein the method further comprises:
determining, by the first electronic device, that a second file is selected; and
in response to an operation of sharing the second file on the first interface, sending, by the first electronic device, the second file to the second electronic device associated with the first user, wherein
the first electronic device is configured to set third permission for the second file, the third permission takes effect when a plurality of applications on the first electronic device send the second file, and the third permission indicates one or more operations that the first user is authorized to perform on the second file.

7. The method according to any one of claims 1 to 6, wherein the first user belongs to a first group, the first group further comprises a third user, and the method further comprises:
in response to the operation of sharing the first file on the first interface, sending, by the first electronic device, the first file to a fourth electronic device associated with the third user, wherein the first permission further indicates one or more operations that the third user is authorized to perform on the first file; or
in response to the operation of sharing the first file on the first interface, sending, by the first electronic device, the first file to the fourth electronic device associated with the third user, wherein the first electronic device is further configured to set fourth permission for the first file, the fourth permission takes effect when a plurality of applications on the first electronic device send the first file, and the fourth permission indicates one or more operations that the third user is authorized to perform on the first file.

8. The method according to any one of claims 1 to 7, wherein before sending, by the first electronic device, the first file to the second electronic device associated with the first user, the method further comprises:
logging in to, by the first electronic device, a first account, wherein the first account belongs to an account of a fourth user.

9. The method according to any one of claims 1 to 8, wherein before sending, by the first electronic device, the first file to the second electronic device associated with the first user, the method further comprises:
obtaining, by the first electronic device, a credential corresponding to the first user; and
encrypting, by the first electronic device, the first file based on the credential.

10. The method according to any one of claims 1 to 9, wherein the credential is obtained by the first electronic device from a server, or the credential is locally obtained by the first electronic device, or the credential is obtained by the first electronic device from the second electronic device.

11. The method according to any one of claims 1 to 10, wherein that the first electronic device is configured to set the first permission for the first file specifically comprises:
the first electronic device is configured to write field information of the first permission into the first file; or
the first electronic device is configured to send a first message to the server, wherein the first message comprises field information of the first permission and identification information of the first file, and the first message indicates the server to store an association relationship between the field information of the first permission and the identification information of the first file.

12. The method according to any one of claims 1 to 11, wherein the first permission comprises read-only permission, editable permission, or forward permission, and the editable permission comprises one or more of edit permission, save-as permission, screenshot permission, screen recording permission, print permission, and copy permission.

13. The method according to any one of claims 1 to 12, wherein the first file comprises sensitive information.

14. A data sharing method, applied to a second electronic device, wherein the method comprises:
receiving, by the second electronic device, a first file sent by a first electronic device, wherein the first file is managed and controlled by first permission, the first permission takes effect when a plurality of applications on the second electronic device perform an operation within a management and control range of the first permission on the first file, and the plurality of applications comprise a first application;
obtaining, by the second electronic device, a first operation that is for the first file and that is in the first application; and
in response to the first operation, if the second electronic device determines that the first operation is one or more operations that are indicated by the first permission and that a first user is authorized to perform on the first file, responding, by the second electronic device, to the first operation.

15. The method according to claim 14, wherein before the second electronic device determines that the first operation is one or more operations that are indicated by the first permission and that the first user is authorized to perform on the first file, the method further comprises:
determining, by the second electronic device, that a user performing the first operation is the authenticated first user that has operation permission on the first file.

16. The method according to claim 15, wherein determining, by the second electronic device, that the user performing the first operation is the authenticated first user that has operation permission on the first file specifically comprises:
determining, by the second electronic device, that a login account on the second electronic device is an account of the first user; or
determining, by the second electronic device, that a biometric feature of the user performing the first operation is consistent with a biometric feature of the first user; or
receiving, by the second electronic device, a first message sent by a third electronic device, wherein the first message indicates that the user performing the first operation is the authenticated first user that has operation permission on the first file, and the third electronic device is associated with the second electronic device.

17. The method according to any one of claims 14 to 16, wherein the method further comprises:
when the second electronic device determines that the first operation does not belong to one or more operations that are indicated by the first permission and that the first user is authorized to perform on the first file, displaying, by the second electronic device, first prompt information, wherein the first prompt information is used to inform the user that the second electronic device refuses to respond to the first operation.

18. The method according to any one of claims 14 to 17, wherein the method further comprises:
in response to an operation of sharing the first file, sending, by the second electronic device, the first file to the third electronic device associated with the first user.

19. The method according to any one of claims 14 to 17, wherein the method further comprises:
in response to an operation of sharing the first file, sending, by the second electronic device, the first file to a fourth electronic device associated with a second user.

20. The method according to any one of claims 14 to 19, wherein when the first file is forwarded by the second electronic device, third permission is set for the first file, and an authorization range of the third permission does not exceed an authorization range of the first permission.

21. The method according to any one of claims 14 to 20, wherein the method further comprises:
sending, by the second electronic device, a second message to the first electronic device, wherein the second message indicates a second operation that the first electronic device authorizes the first user to perform on the first file, and the second operation does not belong to one or more operations that are indicated by the first permission and that the first user is authorized to perform on the first file.

22. The method according to any one of claims 14 to 21, wherein the method further comprises:
sending, by the second electronic device, a third message to the first electronic device, wherein the third message indicates a forward operation that the first electronic device authorizes the first user to perform on the first file.

23. The method according to any one of claims 14 to 22, wherein the first file is an encrypted file, and before responding, by the second electronic device, to the first operation, the method further comprises:
obtaining, by the second electronic device, a credential corresponding to the first user; and
decrypting, by the second electronic device, the first file based on the credential.

24. The method according to any one of claims 14 to 23, wherein the second electronic device displays a first identifier, and the first identifier indicates that the first file is an encrypted file.

25. The method according to any one of claims 14 to 24, wherein the first permission is obtained by the second electronic device from the first file; or the first permission is obtained by the second electronic device from a server.

26. The method according to any one of claims 14 to 25, wherein the first permission comprises read-only permission, editable permission, or forward permission, and the editable permission comprises one or more of edit permission, save-as permission, screenshot permission, screen recording permission, print permission, and copy permission.

27. An electronic device, wherein the electronic device comprises one or more processors and one or more memories, wherein the one or more memories are coupled to the one or more processors, the one or more memories are configured to store computer program code, the computer program code comprises computer instructions, and when the one or more processors execute the computer instructions, the electronic device is caused to perform the method according to any one of claims 1 to 13 or claims 14 to 26.

28. A computer storage medium, wherein the computer storage medium stores a computer program, the computer program comprises program instructions, and when the program instructions are run on an electronic device, the electronic device is caused to perform the method according to any one of claims 1 to 13 or claims 14 to 26.

29. A computer program product, wherein when the computer program product runs on a computer, the computer is enabled to perform the method according to any one of claims 1 to 13 or claims 14 to 26.
